# EUROPEAN PATENT APPLICATION

(11) **EP 4 738 049 A1**
(43) Date of publication of application: **06.05.2026**
(21) Application number: 24832283.6
(22) Date of filing: 30.05.2024
(51) Int. Cl.: G06F 1/16, G02B 1/14

(54) **TRANSPARENT WINDOW AND ELECTRONIC DEVICE INCLUDING SAME**

(30) Priority: 28.06.2023 KR 20230083666; 12.07.2023 KR 20230090358
(71) Applicant: Samsung Electronics Co., Ltd., Suwon-si, Gyeonggi-do 16677 (KR)
(72) Inventor: BAE, Jaehyun, Suwon-si, Gyeonggi-do 16677 (KR); KIM, Minsoo, Suwon-si, Gyeonggi-do 16677 (KR); KIM, Yongwoon, Suwon-si, Gyeonggi-do 16677 (KR); KIM, Taejeong, Suwon-si, Gyeonggi-do 16677 (KR); LEE, Soogyu, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2024/007371
(87) International publication number: WO 2025/005501

(57) **Abstract**

According to an embodiment disclosed herein, an electronic device comprises: a housing that includes a first housing part and a second housing part configured to move between a retracted position and an extended position with respect to the first housing part; a flexible display supported by the first housing part and the second housing part; a transparent window disposed on the outer surface of the flexible display; and a blocking structure disposed between the housing and the flexible display and configured to restrict foreign substances entering from the outside. A portion of the flexible display is configured to move inward from the front side of the housing together with the transparent window as the second housing part moves from the extended position to the retracted position, and the thickness of a first part of the transparent window may be less than the thickness of a second part of the transparent window.

## Description

### [Technical Field]

Various embodiments of the disclosure relate to an electronic device, e.g., a transparent window and an electronic device including the same.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device may include a housing including a first housing part and a second housing part configured to move with respect to the first housing part between a retracted position and an extended position, a flexible display supported by the first housing part and the second housing part, a transparent window disposed on an outer surface of the flexible display, and a blocking structure disposed between the housing and the flexible display and configured to limit an inflow of foreign objects from outside. A portion of the flexible display is configured to move from a front side of the housing to an interior thereof with the transparent window as the second housing part moves from the extended position to the retracted position. A thickness of a first portion of the transparent window may be thinner than a thickness of a second portion of the transparent window.

According to an embodiment of the disclosure, an electronic device may include a housing including a first housing part and a second housing part configured to slide with respect to the first housing part, a flexible display including a first display area disposed on the second housing part and a second display area extending from the first display area, wherein at least a portion of the second display area is configured to move based on a slide movement of the second housing part, a blocking structure disposed between the housing and the flexible display and configured to limit an inflow of foreign objects from outside, and a transparent window covering an outer surface of the flexible display, the transparent window including a first cover area disposed on the first display area and a second cover area disposed on the second display area. A thickness of at least a portion of the first cover area may be different from a thickness of at least a portion of the second cover area.

According to an embodiment of the disclosure, an electronic device may include a housing including a first housing part and a second housing part. The second housing part is configured to be movably connected to the first housing part between a retracted position and an extended position, a flexible display connected to the first housing part and the second housing part such that a size of a portion visible from a front side of the housing is changed as the second housing part moves between the retracted position and the extended position, a blocking structure disposed between the housing and the flexible display and configured to limit an inflow of foreign objects from outside, and a transparent window covering an outer surface of the flexible display. The transparent window may include a recess recessed in an outer surface of the transparent window.

### [Brief Description of Drawings]

FIG. 1 is a block diagram illustrating an electronic device in a network environment according to an embodiment.
FIG. 2 is a view illustrating a state in which a second display area of a display is received in a housing according to an embodiment of the disclosure.
FIG. 3 is a view illustrating a state in which a second display area of a display is exposed to the outside of a housing according to an embodiment of the disclosure.
FIG. 4 is an exploded perspective view illustrating an electronic device according to an embodiment of the disclosure.
FIG. 5A is a cross-sectional view taken along line A-A' of FIG. 2 according to an embodiment of the disclosure.
FIG. 5B is a cross-sectional view taken along line B-B' of FIG. 3 according to an embodiment of the disclosure.
FIG. 6 is an exploded perspective view illustrating an electronic device and a blocking structure according to an embodiment of the disclosure.
FIG. 7 is an exploded perspective view illustrating a blocking structure according to embodiments of the disclosure.
FIG. 8 is an assembled perspective view illustrating a blocking structure according to embodiments of the disclosure.
FIG. 9A is a cross-sectional view illustrating a display module including a display and a transparent window according to an embodiment of the disclosure.
FIG. 9B is an enlarged view illustrating portion C of FIG. 9A according to an embodiment of the disclosure.
FIG. 10A is a cross-sectional view illustrating a blocking structure and a display module in a slide-in state of an electronic device according to an embodiment of the disclosure.
FIG. 10B is a cross-sectional view illustrating a blocking structure and a display module in a slide-in state of an electronic device according to an embodiment of the disclosure.
FIG. 11 is a cross-sectional view illustrating a blocking structure and a display module in a slide-out state of an electronic device according to an embodiment of the disclosure.
FIG. 12A is a cross-sectional view illustrating a display module including a display and a transparent window according to an embodiment of the disclosure.
FIG. 12B is an enlarged view illustrating portion D of FIG. 12A according to an embodiment of the disclosure.
FIG. 13 is a cross-sectional view illustrating a blocking structure and a display module in a slide-out state of an electronic device according to an embodiment of the disclosure.
FIG. 14A is a cross-sectional view illustrating a display module including a display and a transparent window according to an embodiment of the disclosure.
FIG. 14B is an enlarged view illustrating portion E of FIG. 14A according to an embodiment of the disclosure.
FIG. 15 is a cross-sectional view illustrating a blocking structure and a display module in a slide-out state of an electronic device according to an embodiment of the disclosure.
FIG. 16 is a cross-sectional view illustrating a display module including a display and a transparent window according to an embodiment of the disclosure.

### [Mode for Carrying out the Invention]

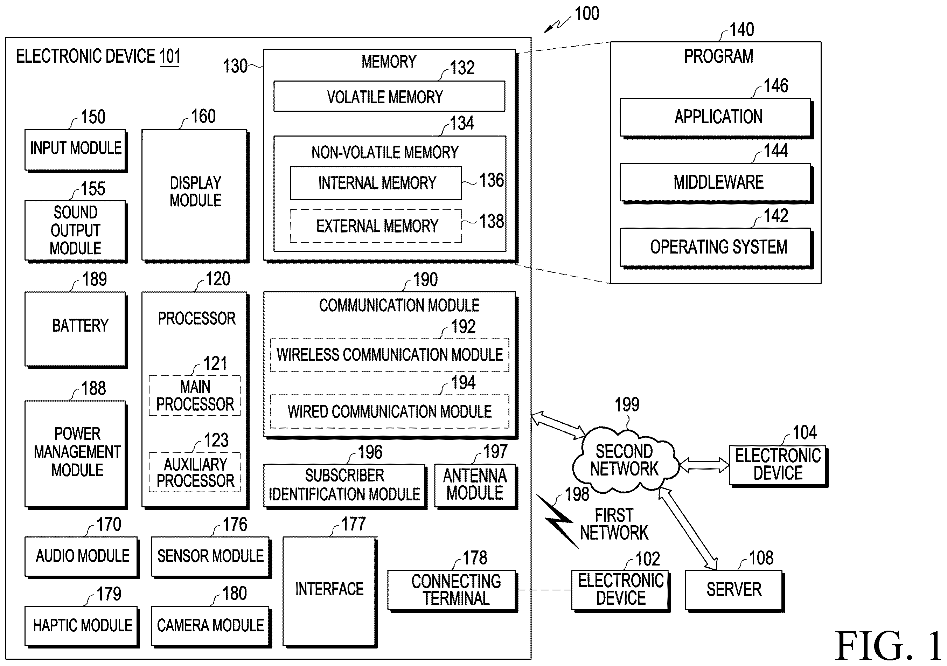

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of lms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

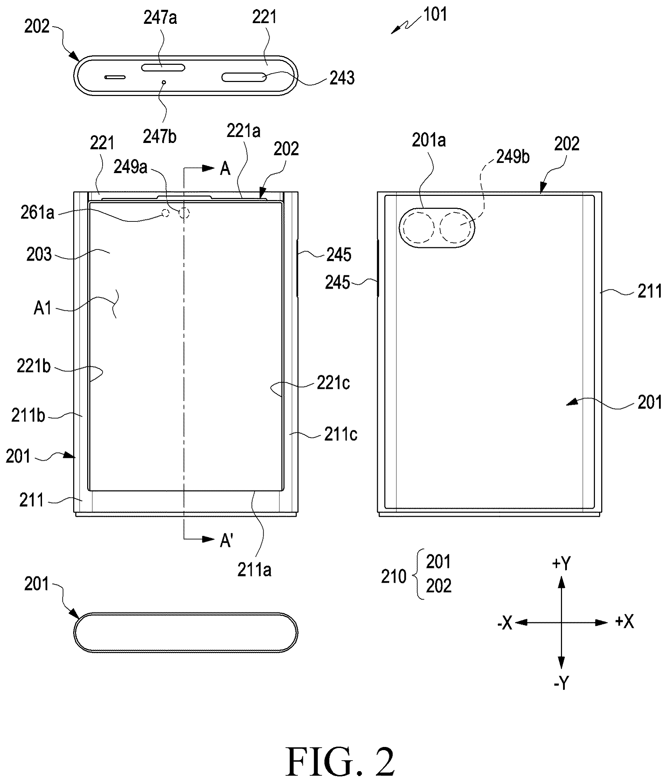

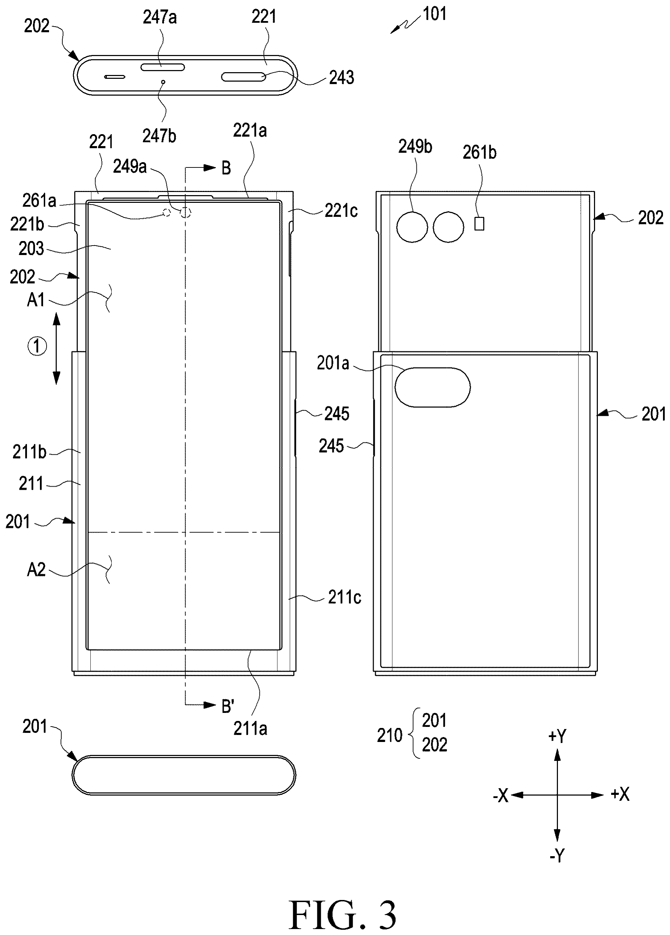

FIG. 2 is a view illustrating a state in which a second display area (e.g., the display area A2 of FIG. 3) of a display is received in a housing according to an embodiment of the disclosure.

FIG. 3 is a view illustrating a state in which a second display area of a display is exposed to the outside of a housing according to an embodiment of the disclosure;

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is open.

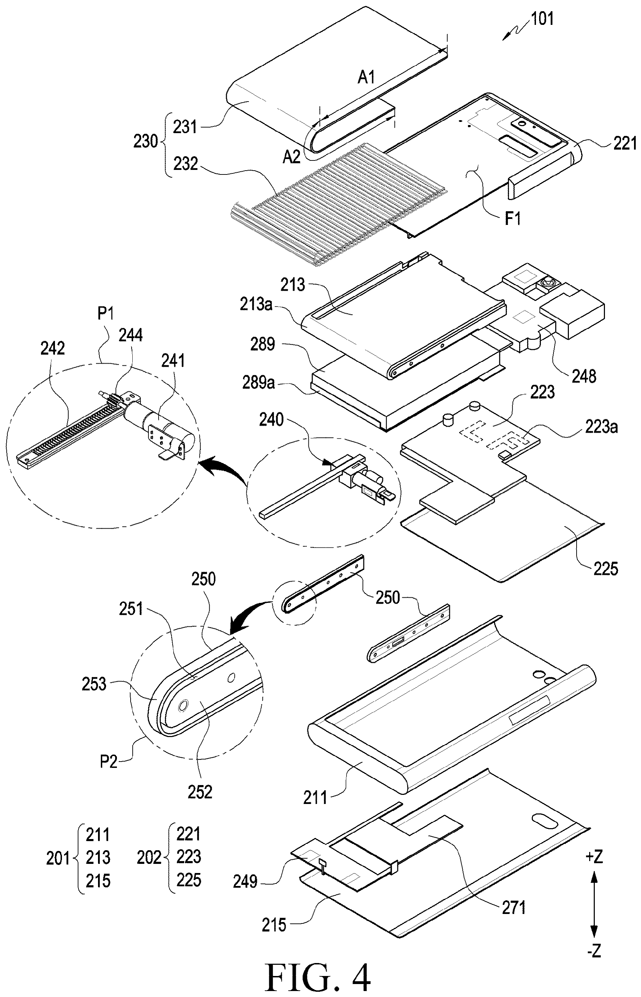

The embodiments of FIGS. 2 and 3 may be combined with the embodiment of FIG. 1 or the embodiments of FIGS. 4 to 16.

Referring to FIGS. 2 and 3, an electronic device 101 (e.g., the electronic device 101 of FIG. 1) may include a housing 210. The housing 210 may include a first housing part 201 and a second housing part 202 disposed to be movable relative to the first housing part 201. According to an embodiment, the electronic device 101 may be interpreted as having a structure in which the first housing part 201 is disposed to be slidable with respect to the second housing part 202. According to an embodiment, the second housing part 202 may be disposed to perform reciprocating motion by a predetermined distance in a predetermined direction with respect to the first housing part 201, for example, a direction indicated by an arrow ①.

According to an embodiment, the second housing part 202 may be referred to as a slide portion or a slide housing, and may be movable relative to the first housing part 201. According to an embodiment, the second housing part 202 may receive various electrical and electronic components, such as a circuit board or a battery. When the electronic device 101 is in the slide-in state, the second housing part 202 may be defined as being at a retracted position, and when the electronic device 101 is in the slide-out state, the second housing part 202 may be defined as being at an extended position. For example, the second housing part 202 may be configured to move between the retracted position and the extended position with respect to the first housing part 201.

According to an embodiment, the slide-in state of the electronic device 101 (or the slide-out state of the electronic device 101) may be changed into the slide-out state of the electronic device 101 (or the slide-in state of the electronic device 101) based on a predefined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing part 201 or a portion of the second housing part 202. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or the slide-out state of the electronic device 101) may be changed into the slide-out state (or the slide-in state of the electronic device 101) in response to a touch input having a pressing strength of a reference strength or more at a contact point on the screen display area (e.g., the first display area A1). For example, the slide-in state (or the slide-out state of the electronic device 101) may be changed into the slide-out state (or the slide-in state of the electronic device 101) in response to a voice input received through the microphone of the electronic device 101. For example, the slide-in state (or the slide-out state of the electronic device 101) may be changed into the slide-out state (or the slide-in state of the electronic device 101) in response to an external force applied to the first housing part 201 and/or the second housing part 202 to move the second housing part 202 with respect to the first housing part 201. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. However, the slide in-out operations of the electronic device 101 are not limited thereto.

According to an embodiment, the first housing part 201 may receive an actuator (e.g., a motor), a speaker, a sim socket, and/or a sub circuit board electrically connected with a main circuit board. The second housing part 202 may receive a main circuit board on which electric components, such as an application processor (AP) or a communication processor (CP) are mounted. According to an embodiment, the second housing part 202 may receive the actuator, speaker, sim socket, and/or the sub circuit board electrically connected with the main circuit board, and the first housing part 201 may receive the main circuit board where electrical components, such as an application processor (AP) or a communication processor (CP), are mounted. According to an embodiment, the sub circuit board and the main circuit board may be disposed in the first housing part 201 or the second housing part 202.

According to an embodiment, the first housing part 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

According to an embodiment, the 1-1th sidewall 211a, 1-2th sidewall 211b, and 1-3th sidewall 211c of the first cover member 211 may be formed to have an opening in a side surface (e.g., a front surface or front face) to receive (or surround) at least a portion of the second housing part 202. For example, at least a portion of the second housing part 202 may be surrounded by the first housing part 201 and slide in the direction parallel to the first surface (e.g., the first surface F1 of FIG. 4), e.g., arrow ① direction, while being guided by the first housing part 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing part 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing part 202 moves in a first direction (e.g., direction ①) parallel to the 2-2th sidewall 221b or the 2-3th sidewall 221c, the slide-in state and slide-out state of the electronic device 101 may be formed. In the slide-in state of the electronic device 101, the second housing part 202 may be positioned at a first distance from the 1-1th sidewall 211a of the first housing part 201. In the slide-out state of the electronic device 101, the second housing part 202 may move to be positioned at a second distance larger than the first distance from the 1-1th sidewall 211a of the first housing part 201. In an embodiment, in the slide-in state of the electronic device 101, the first housing part 201 may be formed to surround a portion of the 2-2th sidewall 221b and the 2-3th sidewall 221c.

According to an embodiment, the electronic device 101 may have an intermediate state between the slide-in state (e.g., fully closed state) of FIG. 2 and the slide-out state (e.g., fully open state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) to the height (length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the display 203 may be formed so that the size of a portion of the housing 210, which may be viewed from the front, is changed based on the slide of the second housing part 202. According to an embodiment, the display 203 may include a first display area A1 and a second display area A2 configured to be exposed to the outside of the electronic device 101 based on the slide of the second housing part 202.

According to an embodiment, the first display area A1 may be disposed on the second housing part 202. For example, the first display area A1 may be disposed on the second cover member 221 of the second housing part 202. According to an embodiment, the second display area A2 may extend from the first display area A1, and the second display area A2 may be received in, or visually exposed to the outside of, the first housing part 201 as the second housing part 202 slides relative to the first housing part 201. According to an embodiment, as the electronic device 101 changes from the slide-in state to slide-out state, the display 203 may extend in the lower direction (e.g., -Y direction) of the electronic device 101. For example, in the slide-out state of the electronic device 101, the second display area A2 may be visually exposed under the display 203 (e.g., in the -Y direction). According to an embodiment, as the electronic device 101 changes from the slide-in state to slide-out state, the display 203 may extend in the upper direction (e.g., +Y direction) of the electronic device 101. For example, in the slide-out state of the electronic device 101, the second display area A2 may be visually exposed above the display 203 (e.g., in the +Y direction).

According to an embodiment, the second display area A2 may be received in the space positioned inside the first housing part 201 or exposed to the outside of the electronic device while being substantially guided by one area (e.g., the curved surface 213a of FIG. 4) of the first housing part 201. According to an embodiment, the second display area A2 may move based on a slide of the second housing part 202 in the first direction (e.g., the direction indicated by the arrow ①). For example, while the second housing part 202 slides, a portion of the second display area A2 may be deformed into a curved shape in a position corresponding to the curved surface 213a of the first housing part 201.

According to an embodiment, as viewed from above the second cover member 221 (e.g., front cover), if the electronic device 101 changes from the slide-in state to slide-out state (e.g., if the second housing part 202 slides to extend from the first housing part 201), the second display area A2 may be gradually exposed to the outside of the first housing part 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing part, and a portion of the second display area A2 may remain in the curved shape in the position corresponding to the curved surface 213a.

According to an embodiment, the key input device 245 may be positioned in an area of the housing 210 (e.g., the first housing part 201 and/or second housing part 202). Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing part 201. According to an embodiment, at least a portion of the key input device 245 may be disposed on the 2-1th sidewall 221a, the 2-2th sidewall 221b, and/or the 2-3th sidewall 221c of the second housing part 202.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing part 202, but is not limited thereto. For example, the connector hole 243 or a connector hole not shown may be disposed in the first housing part 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing part 201 and/or the second housing part 202.

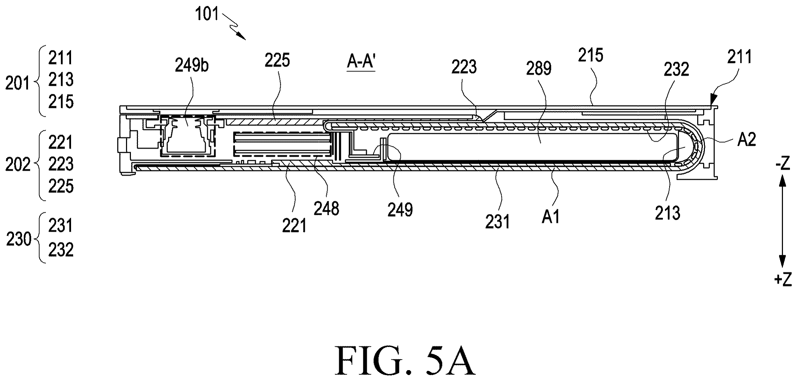

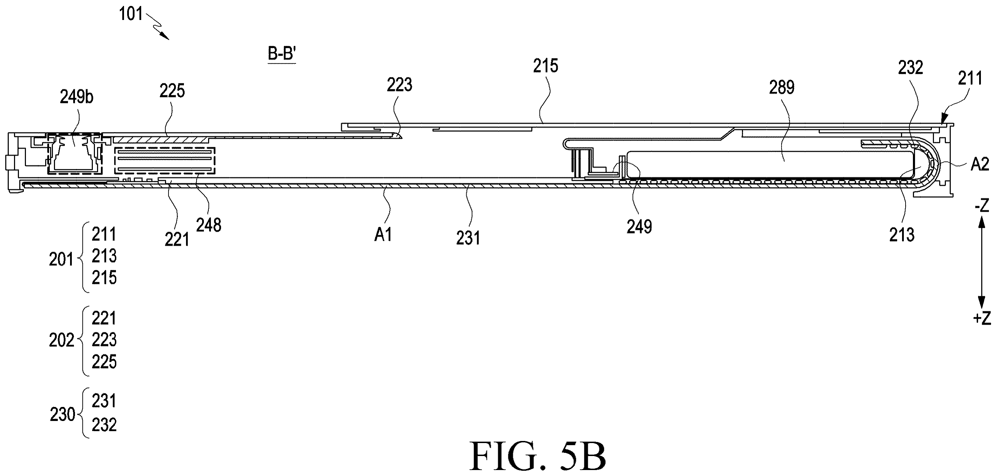

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 101 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing part 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and/or slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225. According to an embodiment, the second camera module 249b may be visually exposed to the outside of the electronic device 101 to capture the outside of the electronic device 101 in the slide-in state and slide-out state of the electronic device 101. For example, the first housing part 201 (e.g., the first rear plate 215 of FIG. 4) may include an opening 201a for the second camera module 249b.

According to an embodiment, an indicator (not shown) of the electronic device 101 may be disposed on the first housing part 201 or the second housing part 202, and the indicator may include a light emitting diode to provide state information about the electronic device 101 as a visual signal. The sensor module 261a or 261b of the electronic device 101 may produce an electrical signal or data value corresponding to the internal operation state or external environment state of the electronic device. The sensor module 261a or 261b may include a proximity sensor, a fingerprint sensor, and/or a biometric sensor (e.g., an iris/face recognition sensor or a heartrate monitor (HRM) sensor). According to an embodiment, the sensor module 261a or 261b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 261a or 261b may be disposed in the first housing part 201 and/or the second housing part 202. The sensor modules 261a and 261b may include a first sensor module 261a (e.g., proximity sensor or illuminance sensor) disposed on the front surface of the electronic device 101 and/or a second sensor module 261b (e.g., heart rate monitoring (HRM) sensor) disposed on the rear surface of the electronic device 101.
FIG. 4 is an exploded perspective view illustrating an electronic device according to an embodiment of the disclosure;
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
Referring to FIG. 4, FIG. 5A, and/or FIG. 5B, an electronic device 101 (e.g., the electronic device 101 of FIGS. 1 to 3) may include a first housing part 201, a second housing part 202, a display assembly 230, and a driving structure 240. The configuration of the first housing part 201, the second housing part 202, and the display assembly 230 of FIGS. 4, 5A, and/or 5B may be identical in whole or part to the configuration of the first housing part 201, the second housing part 202, and the display 203 of FIGS. 2 and/or 3.

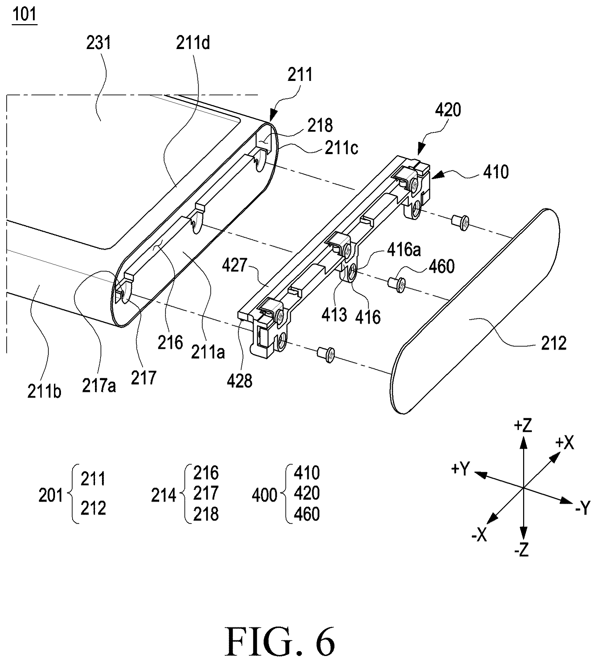

The embodiments of FIGS. 4 to 5B may be partially combined with the embodiments of FIGS. 1 to 3, or the embodiments of FIGS. 6 to 16.

According to an embodiment, the first housing part 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and accommodate a component (e.g., battery 289) positioned in the frame 213. According to an embodiment, the first cover member 211 may be formed to surround at least a portion of the second housing part 202. According to an embodiment, the first cover member 211 may protect the components (e.g., the second circuit board 249 and the frame 213) positioned in the first housing part 201 from external impact. According to an embodiment, the second circuit board 249 electrically connected with an electric component (e.g., an actuator, a speaker, a sim socket, and/or the first circuit board 248) may be connected to the first cover member 211.

According to an embodiment, the frame 213 may be connected to the first cover member 211. For example, the frame 213 may be connected to the first cover member 211. The second housing part 202 is movable relative to the first cover member 211 and/or the frame 213. According to an embodiment, the frame 213 may accommodate the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved portion 213a facing the display assembly 230.

According to an embodiment, the first rear plate 215 may substantially form at least a portion of the exterior of the first housing part 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing part 202 may include a second cover member 221 (e.g., the second cover member 221 of FIGS. 2 and 3), a rear cover 223, and a second rear plate 225.

According to an embodiment, the second cover member 221 may be connected to the first housing part 201 through the guide rail 250 and, while being guided by the guide rail 250, reciprocate linearly in one direction (e.g., the direction of arrow ① in FIG. 3).

According to an embodiment, the second cover member 221 may support at least a portion of the display 231. For example, the second cover member 221 may include a first surface F1. The first display area A1 of the display 231 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221. According to an embodiment, the second cover member 221 may protect the components (e.g., the first circuit board 248 and the rear cover 223) positioned in the second housing part 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed of an injection molded product (e.g., an antenna carrier) of a dielectric material, the at least one antenna element 223a may be disposed on an outer surface (e.g., one surface facing in the -Z-axis direction) of the rear cover 223. For example, the at least one antenna element 223a may include a laser direct structuring (LDS) antenna pattern formed on the outer surface of the rear cover 223. For example, the at least one antenna element 223a may be formed to be embedded when the rear cover 223 is injection-molded. For example, the at least one antenna element 223a may be configured to transmit or receive wireless signals in a designated frequency band (e.g., a legacy band) by electrically connecting with a wireless communication circuit (e.g., the wireless communication module 192 of FIG. 1) disposed on the first circuit board 248.

According to an embodiment, the second rear plate 225 may substantially form at least a portion of the exterior of the second housing part 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 231. According to an embodiment, the display 231 may be referred to as a flexible display, a foldable display, and/or a rollable display. According to an embodiment, the first display area A1 of the display 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display 231. According to an embodiment, as the second housing part 202 slides, the multi-bar structure 232 may move with respect to the first housing part 201. In the slide-in state of the electronic device 101 (e.g., FIG. 2), the multi-bar structure 232 may be mostly received in the first housing part 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing part 202 relative to the first housing part 201. For example, the driving structure 240 may include an actuator 241 configured to generate a driving force for sliding the second housing part 202 with respect to the first housing part 201. The driving structure 240 may include a gear 244 (e.g., a pinion) connected to the actuator 241 and a rack 242 configured to mesh with the gear. FIG. 4 illustrates components (e.g., the actuator 241, the rack 242, and the gear 244) of the driving structure 240 inverted (e.g., facing in the -Z-axis direction) in the circle P1.

According to an embodiment, the housing in which the rack 242 is positioned and the housing in which the actuator 241 is positioned may be different. According to an embodiment, the actuator 241 may be connected to the first housing part 201, and the rack 242 may be connected to the second housing part 202. According to an embodiment, the actuator 241 may be connected to the second housing part 202, and the rack 242 may be connected to the first housing part 201.

According to an embodiment, the actuator 241 may be controlled by a processor (e.g., the processor 120 of FIG. 1). For example, the processor 120 may include an actuator driver driving circuit and transfer a pulse width modulation (PWM) signal for controlling the speed of the actuator 241 and/or the torque of the actuator 241 to the actuator 241. According to an embodiment, the actuator 241 may be electrically coupled to a processor (e.g., the processor 120 of FIG. 1) positioned on the circuit board (e.g., the first circuit board 248 of FIG. 4) using a flexible printed circuit board.

According to an embodiment, the second housing part 202 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing part 201. The second circuit board 249 may be electrically connected to the first circuit board 248 through a flexible board. The second circuit board 249 may be electrically connected with electric components disposed in an end area of the electronic device 101, such as the battery 289 or a speaker and/or a sim socket, and may transfer signals and power. According to an embodiment, the sub circuit board 249 may receive the antenna member 271 (e.g., a coil) or connect with the antenna member 271. The antenna member 271 may include a wireless charging antenna for a wireless charging function, a near field communication (NFC) antenna for an NFC function, and/or a multi-function coil (MFC) antenna including a magnetic secure transmission (MST) antenna for performing an electronic payment function. For example, the battery 289 may receive power from an external electronic device using the antenna member 271 for wireless charging. As another example, the battery 289 may transfer power to the external electronic device using the antenna member 271 for wireless charging.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be positioned on the frame 213. For example, the battery 289 may be surrounded by the frame 213 and the battery cover 289a. According to an embodiment, it may be positioned within the second housing part 202 and is slidable along with the second housing part 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing part 201. For example, the guide rail 250 may be connected to the first cover member 211 and/or the frame 213. According to an embodiment, the slit 251 may be referred to as a groove or recess formed in the inner surface of the guide rail 250. FIG. 4 illustrates an enlarged guide rail 250 in the circle P2.

According to an embodiment, the guide rail 250 may provide a force to the multi-bar structure 232 based on the driving of the actuator 241.

According to an embodiment, when the electronic device 101 changes from the slide-in state to the slide-out state, at least a portion of the second housing part 202 may slide to be exposed to the outside from the first housing part 201 through driving of the actuator 241. For example, the gear 244 may rotate in a first rotation direction based on the driving of the actuator 241. As the rack 242 is fixed on the second cover member 221 of the second housing part 202, the second housing part 202 may slide to be exposed to the outside of the first housing part 201 based on the sliding movement of the rack 242 toward the slide-out direction.

According to an embodiment, when the electronic device 101 changes from the slide-in state to the slide-out state, the inner portion 252 of the guide rail 250 may provide a force to the multi-bar structure 232. The multi-bar structure 232 provided with the force may move along the slit 251 of the guide rail 250, and the second housing part 202 may slide to extend with respect to the first housing part 201. At least a portion of the display assembly 230 that was received between the first cover member 211 and the frame 213 may extend to the front.

According to an embodiment, when the electronic device 101 changes from the slide-out state to the slide-in state, at least a portion of the second housing part 202 may slide to be inserted into the first housing part 201 through driving of the actuator 241. For example, the gear 244 may rotate in a second rotation direction opposite to the first rotation direction based on the driving of the actuator 241. As the rack 242 is fixed on the second cover member 221 of the second housing part 202, the second housing part 202 may slide to enter the first housing part 201 based on the sliding movement of the rack 242 toward the slide-in direction.

According to an embodiment, when the electronic device 101 changes from the slide-out state to the slide-in state, the outer portion 253 of the guide rail 250 may provide a force to the bent multi-bar structure 232. The multi-bar structure 232 receiving the force may be moved along the slit 251 of the guide rail 250, and at least a portion of the second housing part 202 may slide to be received in the first housing part 201. At least a portion of the display assembly 230 may be accommodated between the first cover member 211 and the frame 213.

According to an embodiment, the electronic device 101 may be configured to stop in a designated intermediate state between the slide-in state and the slide-out state by controlling driving of the actuator 241 (free stop function). According to an embodiment, the electronic device 101 may be changed to the slide-in state, the intermediate state, or the slide-out state through the user's manipulation in the state in which the driving force is not provided to the actuator 241.

Referring to FIG. 5A, in the slide-in state of the electronic device 101, at least a portion of the second housing part 202 may be disposed to be accommodated in the first housing part 201. As the second housing part 202 is disposed to be accommodated in the first housing part 201, the overall volume of the electronic device 101 may be reduced. According to an embodiment, when the second housing part 202 is received in the first housing part 201, the size of the display 231 visually exposed may be minimized. For example, when the second housing part 202 is fully accommodated in the first housing part 201, the first display area A1 of the display 231 may be visually exposed, and at least a portion (e.g., a portion facing in the -Z axis) of the second display area A2 may be disposed between the battery 289 and the first rear plate 215.

Referring to FIG. 5B, in the slide-out state of the electronic device 101, at least a portion of the second housing part 202 may protrude from the first housing part 201. As the second housing part 202 protrudes from the first housing part 201, the overall volume of the electronic device 101 may increase. According to an embodiment, when the second housing part 202 protrudes from the first housing part 201, at least a portion of the second display area A2 of the display 231 may be visually exposed to the outside of the electronic device 101 together with the first display area A1.

FIG. 6 is an exploded perspective view illustrating an electronic device and a blocking structure according to an embodiment of the disclosure.

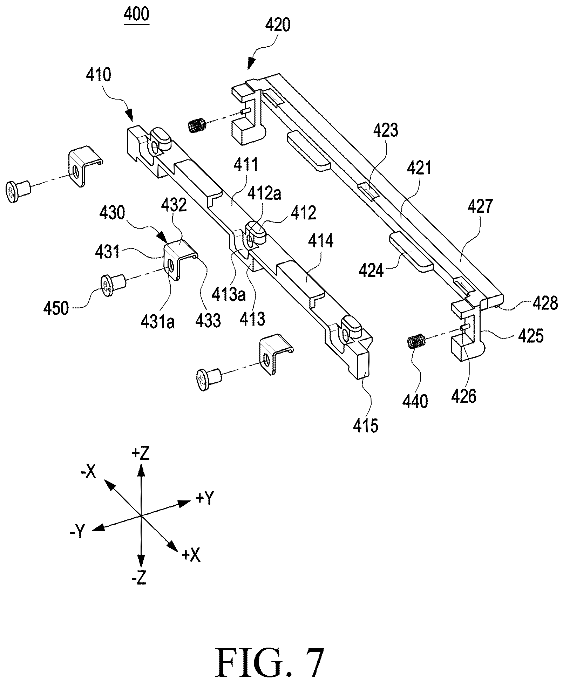

FIG. 7 is an exploded perspective view illustrating a blocking structure according to embodiments of the disclosure.

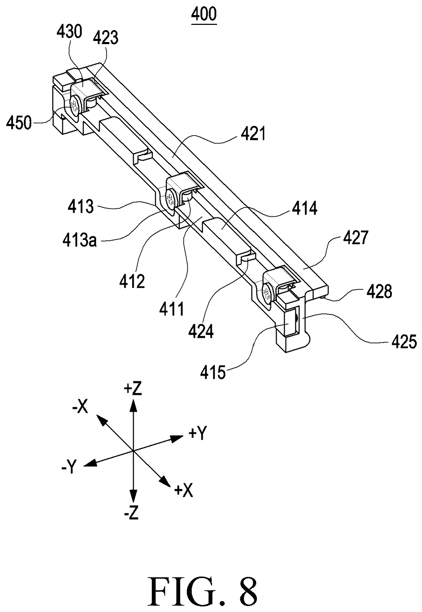

FIG. 8 is an assembled perspective view illustrating a blocking structure according to embodiments of the disclosure.

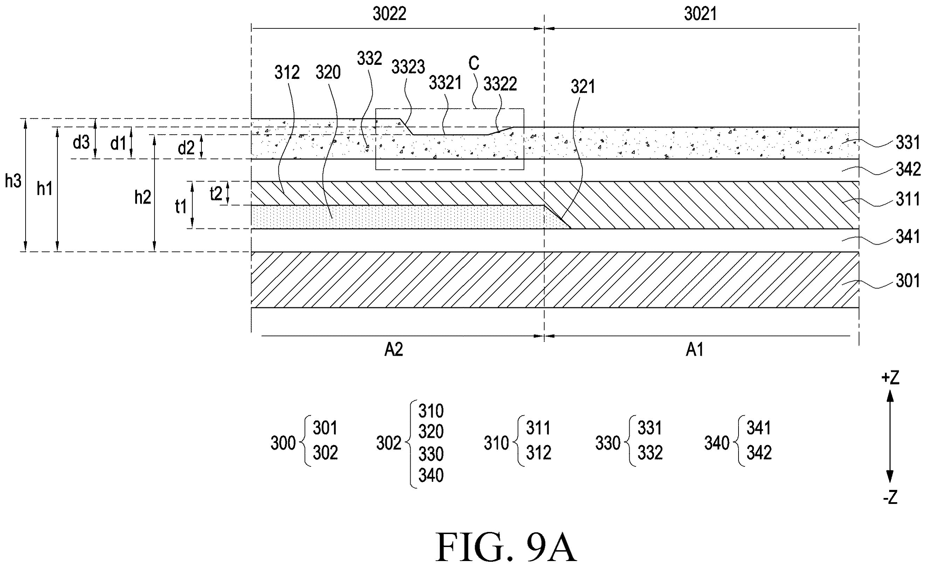

The embodiments of FIGS. 6 to 8 may be combined with the embodiments of FIGS. 1 to 5B or the embodiments of FIGS. 9A to 16.

Referring to FIGS. 6 to 8, an electronic device 101 (e.g., the electronic device 101 of FIGS. 2 to 5B) may include a first housing part 201, a display 231, and/or a blocking structure 400.

The configuration of the first housing part 201 of FIGS. 6 to 8 may be identical in whole or part to the configuration of the first housing part 201 of FIGS. 2 to 5B. The configuration of the display 231 of FIG. 6 may be identical in whole or part to the configuration of the display 203 of FIGS. 2 to 3 or the configuration of the display 231 of FIGS. 4 to 5B.

According to an embodiment, the first housing part 201 may include a first cover member 211 (e.g., the first cover member 211 of FIGS. 2 to 5B) or a deco member 212.

According to an embodiment, the first cover member 211 may include a 1-1th side wall 211a (e.g., the 1-1th side wall 211a of FIGS. 2 to 3), a 1-2th side wall 211b (e.g., the 1-2th side wall 211b of FIGS. 2 to 3), or a 1-3rd side wall 211c (e.g., the 1-3rd side wall 211c of FIGS. 2 to 3).

According to an embodiment, the first cover member 211 may include a front surface 211d. The front surface 211d of the first cover member 211 may be defined and/or interpreted as a partial component of the 1-1th side wall 211a.

According to an embodiment, the front surface 211d of the first cover member 211 may cover at least a portion of the display 231. For example, the front surface 211d of the first cover member 211 may cover a curved portion (e.g., at least partially rolled portion) of the second display area (e.g., the second display area A2 of FIGS. 2 to 4). For example, the front surface 211d of the first cover member 211 may cover at least a portion of the second display area (e.g., the second display area A2 of FIGS. 2 to 4) located on a curved surface (e.g., the curved surface 213a of FIG. 4).

According to an embodiment, the front surface 211d of the first cover member 211 may be spaced apart from at least a portion of the display 231 (e.g., the second display area A2). For example, a predetermined gap may be formed between the front surface 211d of the first cover member 211 and the second display area (e.g., the second display area A2 of FIGS. 2 to 5D). For example, if an end of the front surface 221d (e.g., an end facing the +Y direction of FIG. 6) contacts the display 231, when the display 231 is moved by sliding, at least a portion of the second display area may be scratched by the end of the front surface 211d. According to an embodiment, as the front surface 211d of the first cover member 211 is spaced apart from at least a portion of the display 231, occurrence of scratches on the second display area may be limited or decreased when the display 231 is moved by sliding.

According to an embodiment, the first cover member 211 may include a seating structure 214. The seating structure 214 may provide a space where the blocking structure 400 is seated or received.

According to an embodiment, the seating structure 214 may be a space formed by an opening penetrating through the 1-1th side wall 211a and a groove recessed in the 1-1th side wall 211a. According to an embodiment, the seating structure 214 may be a space surrounded or defined by the 1-1th side wall 211a, the 1-2th side wall 211b, the 1-3rd side wall 211c, and the front surface 211d.

According to an embodiment, in the seating structure 214, the blocking structure 400 configured to block an inflow of foreign objects from outside into the interior of the electronic device 101 may be inserted or disposed.

According to an embodiment, the seating structure 214 may include a first opening 216 penetrating through at least a portion of the 1-1th side wall 211a. The first opening 216 may extend along a width direction of the first cover member 211 (e.g., an X-axis direction of FIGS. 6 to 8).

According to an embodiment, the first opening 216 may receive at least a portion of the blocking structure 400. For example, the first opening 216 may provide a space into which at least a portion of the blocking structure 400 (e.g., a second blocking member 427) may be inserted.

According to an embodiment, the seating structure 214 may include a first seating groove 217 formed in the 1-1th side wall 211a. The first seating groove 217 may have a groove shape recessed in at least a portion of the 1-1th side wall 211a. At least a portion of the blocking structure 400 (e.g., a fifth protruding portion 416 of a base member 410) may be positioned in the first seating groove 217. The seating structure 214 may further include a seating hole 217a penetrating through at least a portion of the 1-1th side wall 211a defining the first seating groove 217. A second fastening member 460 may be inserted into the seating hole 217a. The fifth protruding portion 416 of the base member 410 of the blocking structure 400 may be inserted into the first seating groove 217. The fifth protruding portion 416 may be coupled to the first seating groove 217 through the second fastening member 460 inserted into a second hole 416a and the seating hole 217a in a state in which the fifth protruding portion 416 is inserted into the first seating groove 217.

According to an embodiment, the seating structure 214 may further include a second opening 218 connected to the first opening 216. The second opening 218 may be formed at two opposite ends of the first opening 216 and may be a portion penetrating through the 1-1th side wall 211a. According to an embodiment, a second guide portion 425 of the blocking structure 400 may be inserted into the second opening 218. The first opening 216 and the second opening 218 may be substantially defined as one opening.

According to an embodiment, the blocking structure 400 may block an inflow of foreign objects from outside into a space between the first housing 201 (e.g., the first cover member 211) and the display 231. According to an embodiment, the blocking structure 400 may be disposed or positioned in the seating structure 214.

According to an embodiment, the blocking structure 400 may block an inflow of foreign objects from outside into a space between the front surface 211d of the first cover member 211 and the display 231 by contacting at least a portion of an outer surface of the display 231.

According to an embodiment, the blocking structure 400 may include a base member 410, a blocking member 420, a fixing member 430, an elastic member 440, a first fastening member 450, or a second fastening member 460.

According to an embodiment, the base member 410 may be coupled to the first housing 201 (e.g., the first cover member 211 of FIG. 5). According to an embodiment, the base member 410 may be inserted into the first opening 216 formed in the first cover member 211.

According to an embodiment, the base member 410 may be fixed to the 1-1th side wall 211a. The blocking member 420 may be slidably coupled to the base member 410.

According to an embodiment, the base member 410 may include an extension member 411, a first protruding portion 412, a second protruding portion 413, a third protruding portion 414, a fourth protruding portion 415, or a fifth protruding portion 416.

According to an embodiment, the extension member 411 may extend in a width direction of the electronic device 101 (e.g., an X-axis direction of FIGS. 6 to 8). According to an embodiment, the extension member 411 may be a portion forming a body of the base member 410.

According to an embodiment, the extension member 411 may be received in the first opening 216.

According to an embodiment, the first protruding portion 412 may be a portion protruding from or extending from at least a portion of an upper surface of the extension member 411 (e.g., a surface facing the +Z direction of FIG. 7). According to an embodiment, the first protruding portion 412 may include a first hole 412a penetrating through at least a portion of the first protruding portion 412. According to an embodiment, the first protruding portion 412 may be coupled to the fixing member 430.

According to an embodiment, the second protruding portion 413 may be a portion protruding from or extending from at least a portion of a lower surface of the extension member 411 (e.g., a surface facing the -Z direction of FIG. 7). According to an embodiment, the second protruding portion 413 may be provided in a number corresponding to the first protruding portion 412 and may have a position corresponding to the first protruding portion 412.

According to an embodiment, the second protruding portion 413 may include a first groove 413a. The first groove 413a may be formed by recessing at least a portion of the second protruding portion 413. The first groove 413a may also be referred to as a fixing groove.

According to an embodiment, the first groove 413a may receive at least a portion of a fixing portion 431 of the fixing member 430.

According to an embodiment, the third protruding portion 414 may be a portion protruding from or extending from a portion of an upper surface of the extension member 411 (e.g., a surface facing the +Z direction of FIG. 7) where the first protruding portion 412 is not formed.

According to an embodiment, the third protruding portion 414 may extend upward from the upper surface of the extension member 411 (e.g., toward the +Z direction of FIG. 7) and may extend from an upper end of the third protruding portion 414 toward the blocking member 420. A first guide portion 424 of the blocking member 420 may be inserted between the extension member 411 and the third protruding portion 414.

According to an embodiment, the fourth protruding portion 415 may be a portion protruding from two opposite ends of the extension member 411. In an embodiment, a length or thickness of the fourth protruding portion 415 (e.g., a length or thickness in a Y-axis direction of FIG. 7) may be smaller than a length or thickness of the extension member 411 (e.g., a length or thickness in the Y-axis direction of FIG. 7). In an embodiment, the length or thickness of the fourth protruding portion 415 may be greater than or substantially the same as the length or thickness of the extension member 411.

According to an embodiment, the fourth protruding portion 415 may be received in the second guide portion 425 of the blocking member 420. Further, an upper end (e.g., an end facing the +Z direction of FIGS. 6 to 8) and a bottom end (e.g., an end facing the -Z direction of FIGS. 6 to 8) of the fourth protruding portion 415 may be constrained by the second guide portion 425.

According to an embodiment, the fifth protruding portion 416 may protrude downward from the second protruding portion 413 (e.g., see FIG. 6). According to an embodiment, the fifth protruding portion 416 may include a second hole 416a penetrating through at least a portion of the fifth protruding portion 416. Although illustration of the fifth protruding portion 416 of FIG. 5 is omitted in FIGS. 6 to 7, it should be understood that the blocking structure 400 includes the fifth protruding portion 416.

According to an embodiment, the fifth protruding portion 416 of the base member 410 may be positioned in the first seating groove 217 and may be fixed to the seating hole 217a through the second fastening member 460.

According to an embodiment, the blocking member 420 may include a first blocking member 421, a second blocking member 427, or a sealing member 428. According to an embodiment, the blocking member 420 may be coupled to the base member 410. Further, the blocking member 420 may be received in the first opening 216 and may face at least a portion of the display 231.

According to an embodiment, the first blocking member 421 may extend in a width direction of the electronic device 101 (e.g., an X-axis direction of FIGS. 6 to 8). The first blocking member 421 may be a portion forming a body of the blocking member 420.

According to an embodiment, the first blocking member 421 may include a second groove 423 recessed in at least a portion of an upper surface of the first blocking member 421 (e.g., a surface facing the +Z direction of FIGS. 6 to 8).

According to an embodiment, at least a portion of a bending portion 433 of the fixing member 430 may be received in the second groove 423.

According to an embodiment, the first blocking member 421 may include a first guide portion 424 protruding from a surface of the first blocking member 421 facing the base member 410. The first guide portion 424 may be inserted into a space formed between the third protruding portion 414 and the extension member 411. A number of the first guide portion 424 may correspond to a number of the third protruding portion 414.

According to an embodiment, the first blocking member 421 may include a second guide portion 425 formed at two opposite ends of the first blocking member 421. The fourth protruding portion 415 of the base member 410 may be inserted into the second guide portion 425. According to an embodiment, the second guide portion 425 may be formed to surround at least a portion of the fourth protruding portion 415.

According to an embodiment, the first blocking member 421 may include a guide pin 426 protruding from at least a portion of the second guide portion 425. According to an embodiment, the elastic member 440 may be fitted on the guide pin 426. According to an embodiment, the elastic member 440 may be a spring member. According to an embodiment, the elastic member 440 may be disposed between the fourth protruding portion 415 of the base member 410 and the second guide portion 425 of the blocking member 420.

According to an embodiment, the second blocking member 427 may extend forward from a front surface of the first blocking member 421 (e.g., a surface facing the +Y direction of FIGS. 6 to 8). According to an embodiment, the second blocking member 427 may extend in a width direction of the electronic device 101 (e.g., an X-axis direction of FIGS. 6 to 8) like the first blocking member 421.

According to an embodiment, the first blocking member 421 and the second blocking member 427 may be integrally formed. According to an embodiment, the first blocking member 421 and the second blocking member 427 may be manufactured as separate members and assembled or coupled.

According to an embodiment, the sealing member 428 may be coupled to at least a portion of the second blocking member 427. For example, the sealing member 428 may be coupled to a lower surface of the second blocking member 427 (e.g., a surface facing the -Z direction of FIGS. 6 to 8).

According to an embodiment, the sealing member 428 may be configured to contact at least a portion of the display 231 or to be spaced apart from at least a portion of the display 231. In a state in which the sealing member 428 contacts at least a portion of the display 231, the sealing member 428 may block an inflow of foreign objects from outside into a space between the front surface 211d of the first cover member 211 and the display 231. For example, the sealing member 428 may be configured to seal a space between the front surface 211d of the first cover member 211 and the display 231.

According to an embodiment, the fixing member 430 may include a fixing portion 431 fixed to the first groove 413a, an extension 432 extending from the fixing portion 431, or a bending portion 433 bent from the extension 432.

According to an embodiment, the fixing portion 431 may be inserted into the first groove 413a (or fixing groove). The fixing member 430 may include a fixing hole 431a penetrating through at least a portion of the fixing portion 431.

According to an embodiment, in a state in which the fixing portion 431 is inserted into the first groove 413a, the fixing portion 431 may be fixed to the first groove 413a and/or the first protruding portion 412 through a first fastening member 450 (e.g., a bolt or a pin). For example, the first fastening member 450 may be inserted into the fixing hole 431a and the first hole 412a.

According to an embodiment, the blocking member 420 of the blocking structure 400 may be coupled to the base member 410 so as to be slidable relative to the base member 410.

According to an embodiment, the fourth protruding portion 415 of the base member 410 may be inserted into a space formed by the second guide portion 425 of the blocking member 420. According to an embodiment, the first guide portion 424 of the blocking member 420 may be inserted into a space formed by the third protruding portion 414 of the base member 410.

According to an embodiment, the fixing portion 431 of the fixing member 430 may be fixed to the first groove 413a or the first protruding portion 412 of the base member 410. The extension 432 of the fixing member 430 may face or tightly contact an upper surface of the first protruding portion 412 (e.g., a surface facing the +Z direction of FIGS. 6 to 8). The bending portion 433 of the fixing member 430 may be inserted into the second groove 423 of the blocking member 420.

Referring to FIG. 6, since the fifth protruding portion 416 of the base member 410 is fixed to the first seating groove 217 of the first cover member 211, the base member 410 may have a fixed position with respect to the first cover member 211.

According to an embodiment, the second guide portion 425 of the blocking member 420 may be disposed to surround the fourth protruding portion 415 of the base member 410. The second guide portion 425 may contact an upper end (e.g., an end facing the +Z direction of FIGS. 6 to 8) and a bottom (e.g., an end facing the -Z direction of FIGS. 6 to 8) of the fourth protruding portion 415. Accordingly, when the blocking member 420 slides relative to the base member 410, tilting of the blocking member 420 with respect to the base member 410 may be limited.

According to an embodiment, the first guide portion 424 of the blocking member 420 may be inserted into a space formed between the third protruding portion 414 and the extension member 411 of the base member 410. Accordingly, when the blocking member 420 slides relative to the base member 410, tilting of the blocking member 420 with respect to the base member 410 may be limited.

According to an embodiment, the bending portion 433 of the fixing member 430 may be inserted into the second groove 423 of the first blocking member 421. When the blocking member 420 slides relative to the base member 410 in a first sliding direction (e.g., a +Y direction of FIGS. 6 to 8), the bending portion 433 of the fixing member 430 may catch on the second groove 423. Accordingly, when the blocking member 420 is moved in the first sliding direction by the elastic member 440, a sliding movement distance of the blocking member 420 may be limited by the bending portion 433 of the fixing member 430, and the blocking member 420 may be prevented from being separated from the base member 410.

According to an embodiment, the elastic member 440 may be disposed between the base member 410 and the blocking member 420. For example, the elastic member 440 may be disposed between the fourth protruding portion 415 of the base member 410 and the second guide portion 425 of the blocking member 420. According to an embodiment, the elastic member 440 may be compressed by being pressed by the second guide portion 425 when the blocking member 420 is moved in a second sliding direction (e.g., a -Y direction of FIGS. 6 to 8). According to an embodiment, the elastic member 440 may press the blocking member 420 while being elastically restored. The elastic member 440 may press the second guide portion 425 so that the blocking member 420 may slide in the first sliding direction (e.g., a +Y direction of FIG. 6A).

According to an embodiment, the first housing 201 may further include a deco member 212. The deco member 212 may be formed of, e.g., a metal and/or non-metallic material (e.g., polymer). The deco member 212 may be coupled to the first cover member 211 to cover the 1-1th side wall 211a of the first cover member 211. The deco member 212 may cover and protect the blocking structure 400 so that the blocking structure 400 is not exposed to the outside of the electronic device 101.

FIG. 9A is a cross-sectional view illustrating a display module including a display and a transparent window according to an embodiment of the disclosure.

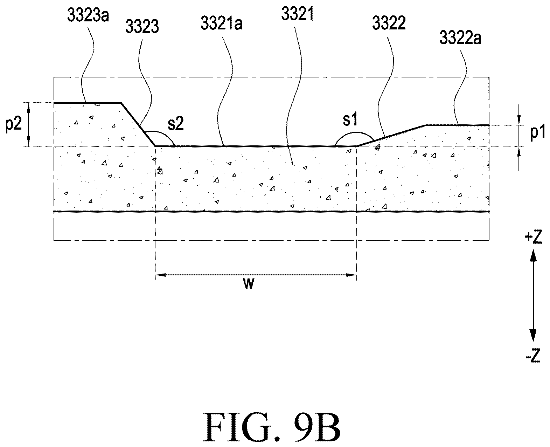

FIG. 9B is an enlarged view illustrating portion C of FIG. 9A according to an embodiment of the disclosure.

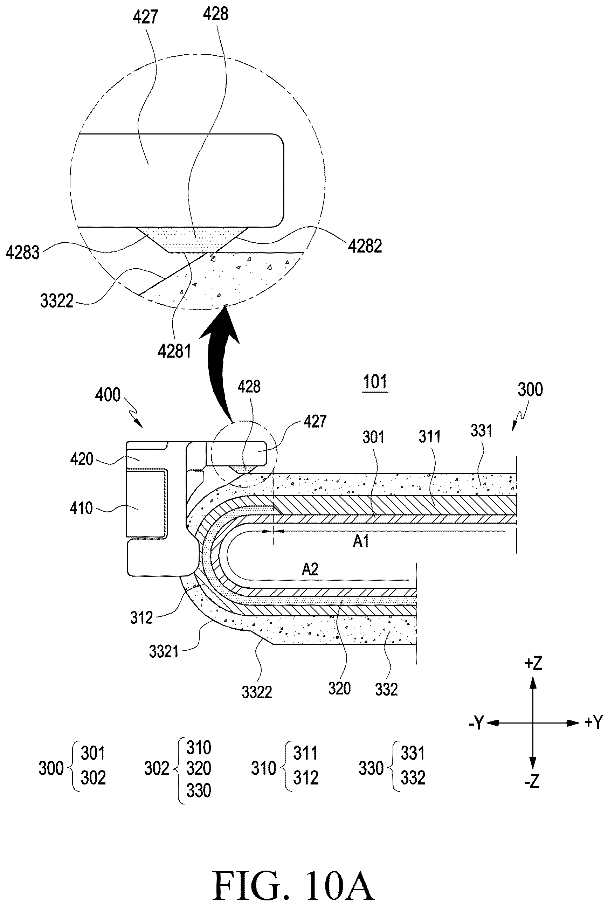

FIG. 10A is a cross-sectional view illustrating a blocking structure and a display module in a slide-in state of an electronic device according to an embodiment of the disclosure.

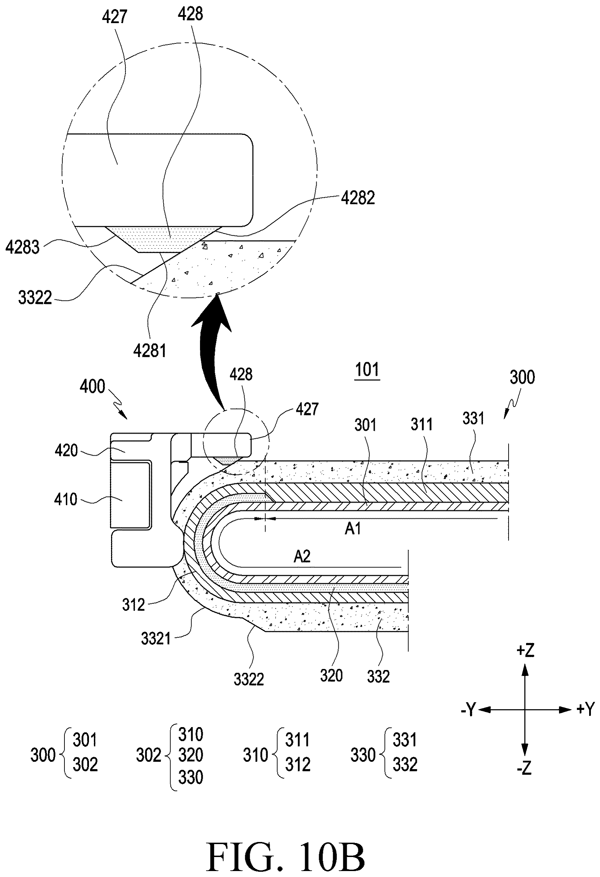

FIG. 10B is a cross-sectional view illustrating a blocking structure and a display module in a slide-in state of an electronic device according to an embodiment of the disclosure.

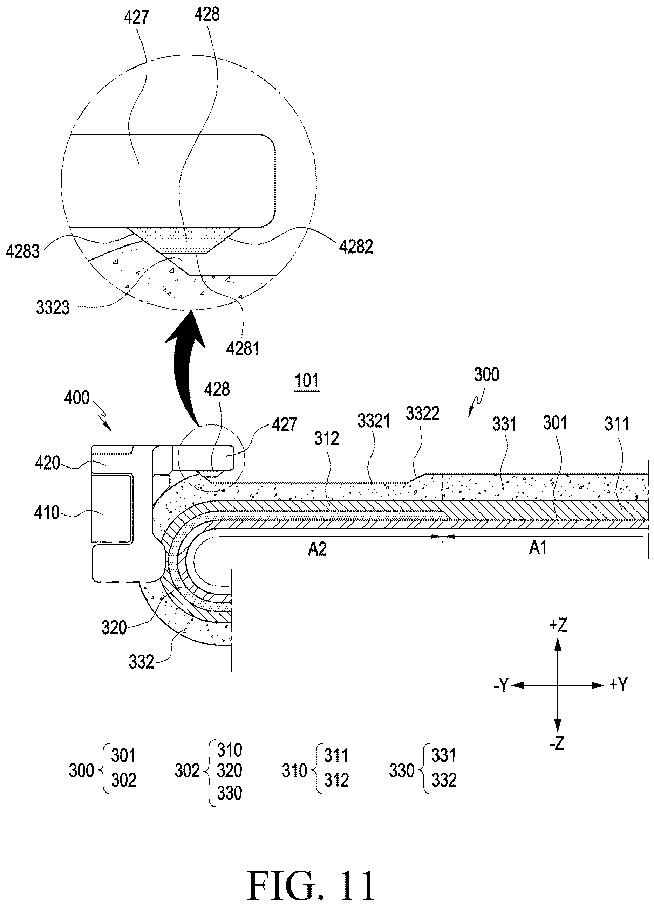

FIG. 11 is a cross-sectional view illustrating a blocking structure and a display module in a slide-out state of an electronic device according to an embodiment of the disclosure.

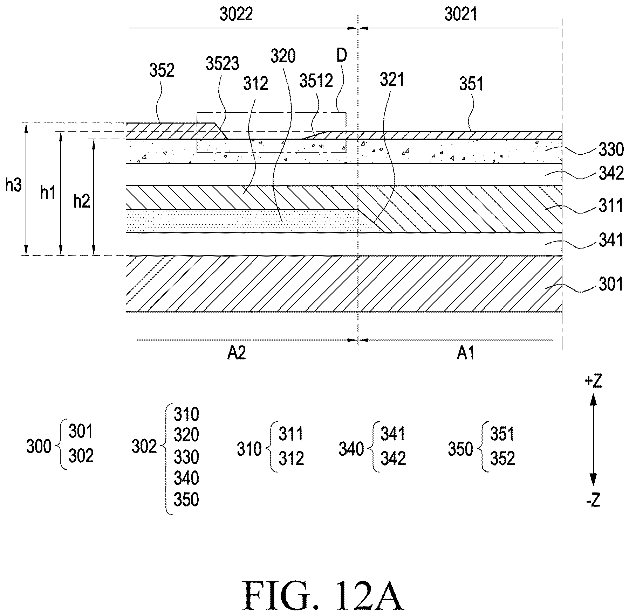

The embodiments of FIGS. 9A to 11 may be combined with the embodiments of FIGS. 1 to 8 or the embodiments of FIGS. 12A to 16.

Referring to FIGS. 9A to 11, an electronic device 101 (e.g., the electronic device 101 of FIGS. 1 to 6) may include a display module 300 or a blocking structure 400. The blocking structure 400 may include a base member 410, a blocking member 420, a second blocking member 427, or a sealing member 428.

The configuration of the display module 300 of FIGS. 9A to 11 may be identical in whole or part to the configuration of the display 203 of FIGS. 2 to 3 or the configuration of the display 231 of FIGS. 4 to 6. The configuration of the blocking structure 400, the base member 410, the blocking member 420, the second blocking member 427, or the sealing member 428 of FIGS. 9A to 11 may be identical in whole or part to the configuration of the blocking structure 400, the base member 410, the blocking member 420, the second blocking member 427, or the sealing member 428 of FIGS. 6 to 8.

According to an embodiment, the display module 300 may include a display 301 or a transparent window 302.

According to an embodiment, the display 301 may include a display panel configured to output a visual image. A transparent window 302 configured to protect the display 301 may be stacked on an outer surface of the display 301 (e.g., a surface facing the +Z direction of FIG. 9A). For example, the transparent window 302 may be disposed on the outer surface of the display 301.

According to an embodiment, the display 301 may include a first display area A1 (e.g., the first display area A1 of FIGS. 2 to 5B) disposed on a second housing part (e.g., the second housing part 202 of FIGS. 2 to 5B) or a second display area A2 (e.g., the second display area A2 of FIGS. 2 to 5B) extending from the first display area A1.

According to an embodiment, the second display area A2 may be at least partially unfolded or form at least a partial curved surface according to a state change of the electronic device 101.

According to an embodiment, a portion of the flexible display 301 (e.g., a portion of the second display area A2) may be configured to move from a front side of a housing (e.g., the housing 210 of FIGS. 2 to 3) to an interior thereof with the transparent window 302 as a second housing part (e.g., the second housing part 202 of FIGS. 2 to 5B) moves from an extended position (e.g., FIG. 3 or FIG. 5B) to a retracted position (e.g., FIG. 2 or FIG. 5A).

According to an embodiment, a thickness of the transparent window 302 (e.g., a thickness in a Z-axis direction of FIG. 9A) may vary. For example, the transparent window 302 may include a first portion having a thinner thickness h2 or a second portion having a thickness (h1, h3) greater than the thickness of the first portion. For example, the first portion of the transparent window 302 having the thinner thickness h2 may correspond to a portion of the flexible display 301 configured to move from a front side of a housing (e.g., the housing 210 of FIGS. 2 to 3) to an interior thereof. For example, the second portion of the transparent window 302 may be a portion other than the first portion of the transparent window 302.

According to an embodiment, the transparent window 302 may be stacked on the outer surface of the display 301. The transparent window 302 may be configured to protect the display 301 from external impact. The transparent window 302 may include a first cover area 3021 stacked on the first display area A1 or a second cover area 3022 stacked on the second display area A2. The transparent window 302 may be defined and/or referred to as a cover window.

According to an embodiment, the first cover area 3021 of the transparent window 302 may be a portion stacked on the first display area A1 of the display 301 and may substantially form a flat surface.

According to an embodiment, the second cover area 3022 of the transparent window 302 may be a portion stacked on the second display area A2 of the display 301 and may at least partially form a curved surface according to a shape change of the second display area A2.

According to an embodiment, the transparent window 302 may include a glass 310, a transparent resin layer 320, a film layer 330, or an adhesive layer 340.

According to an embodiment, the glass 310 may be disposed on the outer surface of the display 301. The glass 310 may be formed of a substantially transparent and flexible member. For example, the glass 310 may include a glass member (e.g., ultra-thin glass (UTG)) having a thickness that may be at least partially bent.

According to an embodiment, the glass 310 may include a first glass 311 disposed on the first cover area 3021 or a second glass 312 extending from the first glass 311.

According to an embodiment, the first glass 311 may be disposed between the first display area A1 and the film layer 330 (e.g., a first film area 331).

According to an embodiment, the second glass 312 may extend from the first glass 311. The second glass 312 may be disposed between the second display area A2 and the film layer 330 (e.g., a second film area 332). A thickness t2 of the second glass 312 (e.g., a thickness in a Z-axis direction of FIG. 9A) may be smaller than a thickness t1 of the first glass 311 (e.g., a thickness in the Z-axis direction of FIG. 9A). For example, since the first glass 311 is disposed on the first display area A1, which is a flat area of the display 301, the first glass 311 may be provided thicker than the second glass 312 to secure impact resistance strength. Since the second glass 312 is disposed on the second display area A2, which is a rolling area of the display 301, the second glass 312 may be provided thinner than the first glass 311 to secure bending performance.

According to an embodiment, the thickness t1 of the first glass 311 may be about 0.045 mm to about 0.055 mm. For example, the thickness t1 of the first glass 311 may be about 0.05 mm. The thickness t2 of the second glass 312 may be about 0.027 mm to about 0.033 mm. For example, the thickness t2 of the second glass 312 may be about 0.03 mm.

According to an embodiment, the first glass 311 may be defined and referred to as a thick shell glass that may be at least partially bent. The second glass 312 may be defined and referred to as a thin shell glass that may be at least partially bent.

According to an embodiment, the transparent window 302 may include a transparent resin layer 320 that compensates for a thickness difference between the first glass 311 and the second glass 312.

According to an embodiment, the transparent resin layer 320 may be a resin layer filled between the display 301 and the glass 310. For example, the transparent resin layer 320 may be an optically clear resin (OCR), but the disclosure is not limited thereto. According to an embodiment, the transparent resin layer 320 may be an optically clear adhesive (OCA). According to an embodiment, the transparent resin layer 320 may include at least one of optical grade polyurethane, silicone, acryl, polyvinyl acetate (PVAc), or epoxy resin, or may include a mixture (or combination) thereof. According to an embodiment, the transparent resin layer 320 may include various optically transparent resins without being limited to the above-described elements.

According to an embodiment, the transparent resin layer 320 may be positioned between the second display area A2 of the display 301 and the second glass 312. A refractive index or a dispersion ratio of the transparent resin layer 320 may be substantially the same as a refractive index or a dispersion ratio of the glass 310. According to an embodiment, as the transparent resin layer 320 and the second glass 312 are provided with substantially the same optical properties (e.g., refractive index or dispersion ratio), refraction of light at an interface between the transparent resin layer 320 and the second glass 312 may be prevented. Further, by preventing refraction of light between an interface between the transparent resin layer 320 and the first glass 311, distortion of a visual image (or an image) displayed on the display 301 may be decreased.

According to an embodiment, the transparent resin layer 320 may be positioned between the second glass 312 and the display 301but, without limitations thereto, may be positioned between the second glass 312 and the second film area 332.

According to an embodiment, the transparent resin layer 320 may include an inclined portion 321. The inclined portion 321 of the transparent resin layer 320 may be at least partially disposed on the first cover area 3021. The inclined portion 321 may be inclined such that a thickness of the transparent resin layer 320 gradually decreases in a direction from the second cover area 3022 toward the first cover area 3021.

According to an embodiment, the inclined portion 321 may limit or reduce formation of lifting or a gap between the transparent resin layer 320 and the glass 310. For example, compared to a case where the first glass 311 and the transparent resin layer 320 are connected without the inclined portion 321, the inclined portion 321 may limit or reduce formation of lifting or a gap between the transparent resin layer 320 and the first glass 311 even when a boundary between the first cover area 3021 and the second cover area 3022 is repeatedly bent or unfolded.

According to an embodiment, since the transparent resin layer 320 is provided as a member that is relatively soft with respect to the glass 310, the transparent resin layer 320 may be configured to relatively alleviate a texture for a step formed by the transparent window 302 (e.g., a step of the film layer 330) when a user touches the display module 300 or the transparent window 302.

According to an embodiment, the film layer 330 may be stacked on an outer surface of the glass 310. For example, the film layer 330 may include a polyester (PET) film, a protective layer (PL) film, a polyimide (PI) film, a high hardness protective film, or a flexible thin glass (FTG).

According to an embodiment, the film layer 330 may be a surface exposed to the outside of the electronic device among the transparent window 302.

According to an embodiment, the film layer 330 may cover an outer surface of the glass 310. The film layer 330 may prevent the glass 310 from being damaged by external impact. Further, when the glass 310 is damaged, the film layer 330 may limit or reduce scattering of pieces of the glass 310. Accordingly, when the glass 310 is damaged, a user may be limited or prevented from being injured.

According to an embodiment, the film layer 330 may include a first film area 331 disposed on the first cover area 3021 or a second film area 332 disposed on the second cover area 3022.

According to an embodiment, the first film area 331 may be a portion stacked on the first glass 311, and the second film area 332 may be a portion stacked on the second glass 312.

According to an embodiment, the second film area 332 may include a stepped portion 3321, 3322, 3323. The stepped portion 3321, 3322, 3323 may be defined and/or referred to as a recess 3321, 3322, 3323 of the second film area 332. For example, a thickness of a portion of the second film area 332 (e.g., a thickness in a Z-axis direction of FIG. 9A) may be substantially the same as a thickness of the first film area 331 (e.g., a thickness in the Z-axis direction of FIG. 9A), and a thickness of another portion of the second film area 332 (e.g., a thickness in the Z-axis direction of FIG. 9A) may be different from a thickness of the second film area 331.

According to an embodiment, the second film area 332 may include a recess 3321, 3322, 3323 recessed in an upper surface of the second film area 332. The recess 3321, 3322, 3323 may be formed by pressing the film layer 330 with a mold including a protruding portion (or a stepped portion) corresponding to a shape of the recess 3321, 3322, 3323 during manufacture of the film layer 330. Alternatively, the recess 3321, 3322, 3323 may be formed by an extrusion method through an extruder including a slit corresponding to the shape of the recess 3321, 3322, 3323, or by pressing the film layer 330. Alternatively, the recess 3321, 3322, 3323 may be formed through an imprinting method using a pattern mold including a pattern corresponding to the shape of the recess 3321, 3322, 3323.

According to an embodiment, the recess 3321, 3322, 3323 may include a first flat surface 3321, a first inclined surface 3322 in a first area where thickness changes, or a second inclined surface 3323 in a second area where thickness changes.

According to an embodiment, the first flat surface 3321 may be substantially parallel to a lower surface of the second film area 332 (e.g., a surface facing the -Z direction of FIG. 9A) or an upper surface of the second glass 312 (e.g., a surface facing the +Z direction of FIG. 9A).

According to an embodiment, a thickness d2 of the first flat surface 3321 (e.g., a thickness in a Z-axis direction of FIG. 9A) may be smaller than a thickness d1 of the first film area 331.

According to an embodiment, the first inclined surface 3322 may be formed to be inclined from one end of the first flat surface 3321 toward the first film area 331. For example, the first flat surface 3321 and the first inclined surface 3322 may substantially form an obtuse angle (e.g., a first obtuse angle s1 of FIG. 9B). The first inclined surface 3322 may be defined as forming a first area of the second film area 332 where thickness changes (e.g., thickness in a Z-axis direction of FIGS. 9A to 9B).

According to an embodiment, the first inclined surface 3322 may contact at least a portion of the sealing member 428 (e.g., a second flat surface 4281 or a third inclined surface 4282) when the electronic device 101 is in a slide-in state (e.g., FIG. 2). For example, the sealing member 428 of a blocking structure (e.g., the blocking structure 400 of FIGS. 6 to 8) may be configured to contact the first inclined surface 3322 while a second housing part (e.g., the second housing part 202 of FIGS. 2 to 5B) is in a retracted position (e.g., FIG. 2, FIG. 5A, FIG. 10A, or FIG. 10B).

According to an embodiment, the second inclined surface 3323 may be formed to be inclined from the other end of the first flat surface 3321 in a direction away from the first film area 331. For example, the first flat surface 3321 and the second inclined surface 3323 may substantially form an obtuse angle (e.g., a second obtuse angle s2 of FIG. 9B). The second inclined surface 3323 may be defined as forming a second area of the second film area 332 where thickness changes (e.g., thickness in a Z-axis direction of FIGS. 9A to 9B).

According to an embodiment, the second inclined surface 3323 may contact at least a portion of the sealing member 428 (e.g., a fourth inclined portion 4283) when the electronic device 101 is in a slide-out state (e.g., FIG. 3). For example, the sealing member 428 of a blocking structure (e.g., the blocking structure 400 of FIGS. 6 to 8) may be configured to contact the second inclined surface 3323 while a second housing part (e.g., the second housing part 202 of FIGS. 2 to 5B) is in an extended position (e.g., FIG. 3, FIG. 5B, or FIG. 11).

According to an embodiment, an obtuse angle formed between the first inclined surface 3322 and the first flat surface 3321 may be greater than an obtuse angle formed between the second inclined surface 3323 and the first flat surface 3321. Since a first obtuse angle s1 formed between the first inclined surface 3322 and the first flat surface 3321 is provided relatively larger than a second obtuse angle s2 formed between the second inclined surface 3323 and the first flat surface 3321, a sense of heterogeneity felt when touching the first inclined surface 3322 may be decreased or alleviated. Since the first obtuse angle s1 formed between the first inclined surface 3322 and the first flat surface 3321 is provided relatively larger than the second obtuse angle s2 formed between the second inclined surface 3323 and the first flat surface 3321, an impact occurring when the first inclined surface 3323 and the sealing member 428 contact may be decreased or alleviated.

According to an embodiment, a first height p1 of the first inclined surface 3322 (e.g., a height in a Z-axis direction of FIG. 9B) may be defined as a height from a surface of the first flat surface 3321 (e.g., a surface 3321a of FIG. 9B) to a surface of the film area 330 (e.g., a surface 3322a of FIG. 9B) connected to an upper end of the first inclined surface 3322 (e.g., an end facing the +Z direction of FIG. 9B). The first height p1 may be about 45 µm to about 550 µm (micrometer). For example, the first height p1 may be about 50 µm to about 500 µm (micrometer). The first height p1 may also be defined as a depth of the first flat surface 3321 with respect to the first film area 331.

According to an embodiment, a second height p2 of the second inclined surface 3323 (e.g., a height in a Z-axis direction of FIG. 9B) may be defined as a height from the surface of the first flat surface 3321 (e.g., the surface 3321a of FIG. 9B) to a surface of the film area 330 (e.g., a surface 3322a of FIG. 9B) connected to an upper end of the second inclined surface 3323 (e.g., an end facing the +Z direction of FIG. 9B). The second height p2 may be greater than the first height p1. The second height p2 may also be defined as a depth of the first flat surface 3321 with respect to a thickest portion of the second film area 332.

According to an embodiment, a width w of the first flat surface 3321 may be defined as a distance between a lower end of the first inclined surface 3322 (e.g., an end facing the -Z-axis direction of FIG. 9B) and a lower end of the second inclined surface 3323 (e.g., an end facing the -Z-axis direction of FIG. 9B). The width w may be about 9 mm (millimeter) or more. For example, the width w may be about 10 mm (millimeter) or more. For example, a portion of the transparent window 302 having the thinner thickness h2 corresponding to the illustrated width w may be defined as a first portion of the transparent window 302, and a portion of the transparent window 302 having the thick thickness (h1, h3) corresponding to portions other than the first portion may be defined as a second portion of the transparent window 302.

According to an embodiment, a thickness d1 of the first film area 331 may be the same as a thickness d1 of a portion of the second film area 332 connected to the first film area 331.

According to an embodiment, among the second film area 332, a thickness d2 of a portion including the first flat surface 3321 may be smaller than the thickness d1 of the first film area 331. Accordingly, when the electronic device 101 changes (e.g., changes from a slide-out state to a slide-in state or changes from a slide-in state to a slide-out state), the first flat surface 3321 is spaced apart from the sealing member 428, so that occurrence of scratches by the sealing member 428 may be decreased or limited.

According to an embodiment, among the second film area 332, a thickness d3 of a portion connected to the second inclined surface 3323 may be greater than the thickness d1 of the first film area 331. Accordingly, in a slide-out state of the electronic device 101, the second inclined surface 3323 may contact a fourth inclined surface 4283 of the sealing member 428.

According to an embodiment, due to the recess 3321, 3322, 3323 of the second film area 332, in the transparent window 302, a thickness h1 of at least a portion of the first cover area 3021 may be different from a thickness (h2, h3) of at least a portion of the second cover area 3022.

According to an embodiment, a thickness h1 of the first cover area 3021 including the first film area 331 may be the same as a thickness h1 of the second cover area 3022 including a portion of the second film area 332 connected to the first film area 331.

According to an embodiment, among the second film area 332, a thickness h2 of a portion of the second cover area 3022 including the first flat surface 3321 may be smaller than the thickness h1 of the first cover area 3021.

According to an embodiment, among the second film area 332, a thickness h3 of the second cover area 3022 including a portion connected to the second inclined surface 3323 may be greater than the thickness h1 of the first cover area 3021.

According to an embodiment, the adhesive layer 340 may include a first adhesive layer 341 or a second adhesive layer 342.

According to an embodiment, the first adhesive layer 341 may be configured to bond an upper surface of the display 301 (e.g., a surface facing the +Z direction of FIG. 9A) and a lower surface of the glass 310 (e.g., a surface facing the -Z direction of FIG. 9A). The first adhesive layer 341 may include a pressure sensitive adhesive (PSA). The first adhesive layer 341 may bond the first display area A1 of the display 301 and the first glass 311, and may bond the second display area A2 of the display 301 and the transparent resin layer 320.

According to an embodiment, the second adhesive layer 342 may be configured to bond an upper surface of the glass 310 (e.g., a surface facing the +Z direction of FIG. 9A) and a lower surface of the film layer 330 (e.g., a surface facing the -Z direction of FIG. 9A). The second adhesive layer 342 may include a pressure sensitive adhesive (PSA).

Referring to FIGS. 9A to 11, the electronic device 101 may include a blocking structure 400 (e.g., the blocking structure 400 of FIGS. 6 to 8) including a base member 410 (e.g., the base member 410 of FIGS. 6 to 8), a blocking member 420 (e.g., the blocking member 420 of FIGS. 6 to 8), a second blocking member 427 (e.g., the second blocking member 427 of FIGS. 6 to 8), or a sealing member 428 (e.g., the sealing member 428 of FIGS. 6 to 8).

According to an embodiment, the sealing member 428 may include a material capable of being elastically deformed at least partially when contacting the first film area 331 or the second film area 332. For example, the sealing member 428 may include a rubber material or a silicone material. According to an embodiment, the sealing member 428 may include a brush.

According to an embodiment, the sealing member 428 may include a second flat surface 4281, a third inclined surface 4282, or a fourth inclined surface 4283. According to an embodiment, the third inclined surface 4282 may be formed to be inclined with respect to the second flat surface 4281, and may contact at least a portion of the transparent window 302 when the electronic device 101 is in a slide-in state. The fourth inclined surface 4283 may be formed to be inclined with respect to the second flat surface 4281, and may contact at least a portion of the transparent window 302 when the electronic device 101 is in a slide-out state. According to an embodiment, a shape of the sealing member 428 is not limited to the illustrated shape and may include a hemispherical shape, an elliptical shape, or various shapes.

According to an embodiment, the sealing member 428 may be configured to seal a gap formed between a front surface of a first cover member (e.g., the front surface 211d of the first cover member 211 of FIG. 6) and the display module 300 by contacting at least a portion of the transparent window 302.

Referring to FIG. 10A, a slide-in state of the electronic device 101 (e.g., FIG. 2) is illustrated. In the slide-in state of the electronic device 101, the second flat surface 4281 of the sealing member 428 may contact at least a portion of the second film area 332 (e.g., the first inclined surface 3322 or a portion of the second film area 332 connected to the first film area 331 (e.g., the surface 3322a of FIG. 9B)). In the slide-in state of the electronic device 101 (e.g., FIG. 2), as the sealing member 428 contacts at least a portion of the second film area 332, an inflow of foreign objects from outside may be blocked through a gap formed between the front surface of the first cover member and the transparent window 302.

Referring to FIG. 10B, a slide-in state of the electronic device 101 (e.g., FIG. 2) is illustrated. In the slide-in state of the electronic device 101, the third flat surface 4282 of the sealing member 428 may contact at least a portion of the second film area 332 (e.g., the first inclined surface 3322 or a portion of the second film area 332 connected to the first film area 331 (e.g., the surface 3322a of FIG. 9B)). In the slide-in state of the electronic device 101 (e.g., FIG. 2), as the sealing member 428 contacts at least a portion of the second film area 332, an inflow of foreign objects from outside may be blocked through a gap formed between the front surface of the first cover member and the transparent window 302.

Referring to FIG. 11, a slide-out state of the electronic device 101 (e.g., FIG. 3) is illustrated. In the slide-out state of the electronic device 101, the fourth inclined surface 4283 of the sealing member 428 may contact at least a portion of the second film area 332 (e.g., the second inclined surface 3323). In the slide-out state of the electronic device 101 (e.g., FIG. 3), as the sealing member 428 contacts at least a portion of the second film area 332, an inflow of foreign objects from outside may be blocked through a gap formed between the front surface of the first cover member and the transparent window 302.

According to an embodiment, when the electronic device 101 changes (e.g., changes from a slide-in state to a slide-out state or changes from a slide-out state to a slide-in state), the second flat surface 4281 of the sealing member 428 may be spaced apart from the first flat surface 3321 of the second film area 332. Accordingly, when a second housing part (e.g., the second housing part 202 of FIGS. 2 to 5B) slides relative to a first housing part (e.g., the first housing part 201 of FIGS. 2 to 6), the sealing member 428 and the transparent window 302 are spaced apart, so that occurrence of scratches on the film layer 330 of the transparent window 302 (or the second film area 332) may be decreased or limited. For example, at least a portion of the sealing member 428 (e.g., the second flat surface 4281) may be spaced apart from the first flat surface 3321 when a state of a second housing part (e.g., the second housing part 202 of FIGS. 2 to 5B) changes from a retracted position (e.g., FIG. 2, FIG. 5A, FIG. 10A, or FIG. 10B) to an extended position (e.g., FIG. 3, FIG. 5B, or FIG. 11), or when the state of the second housing part changes from an extended position (e.g., FIG. 3, FIG. 5B, or FIG. 11) to a retracted position (e.g., FIG. 2, FIG. 5A, FIG. 10A, or FIG. 10B).

According to an embodiment, an elastic member (e.g., the elastic member 440 of FIG. 7) of the blocking structure 400 may be disposed between the base member 410 and the blocking member 420 and may be configured to press the blocking member 420. When the electronic device 101 changes from a slide-in state to a slide-out state, the second inclined surface 3323 of the transparent window 302 may press the sealing member 428. The second blocking member 427 (or the blocking member 420) to which the sealing member 428 is coupled may slide in a first sliding movement direction (e.g., a +Y direction of FIGS. 10A to 11) relative to the base member 410 while being pressed by the elastic member. Accordingly, as the sealing member 428 slides by a predetermined distance, a force acting on the second inclined surface 3323 is alleviated, so that formation of scratches may be limited or decreased. When the electronic device 101 changes from a slide-out state to a slide-in state, the first inclined surface 3322 of the transparent window 302 may press the sealing member 428. The second blocking member 427 (or the blocking member 420) to which the sealing member 428 is coupled may slide in a second sliding movement direction (e.g., a -Y direction of FIGS. 10A to 11) relative to the base member 410 while compressing the elastic member. Accordingly, as the sealing member 428 slides by a predetermined distance, a force acting on the first inclined surface 3322 is alleviated, so that formation of scratches may be limited.

FIG. 12A is a cross-sectional view illustrating a display module including a display and a transparent window according to an embodiment of the disclosure.

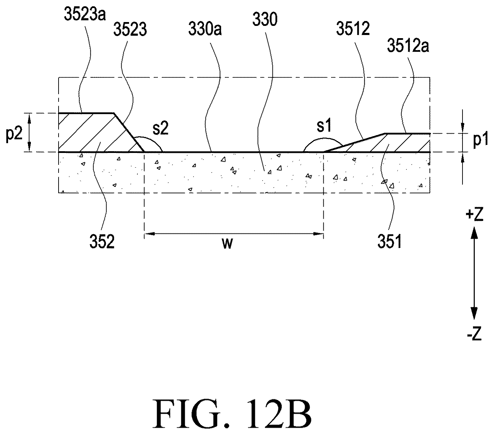

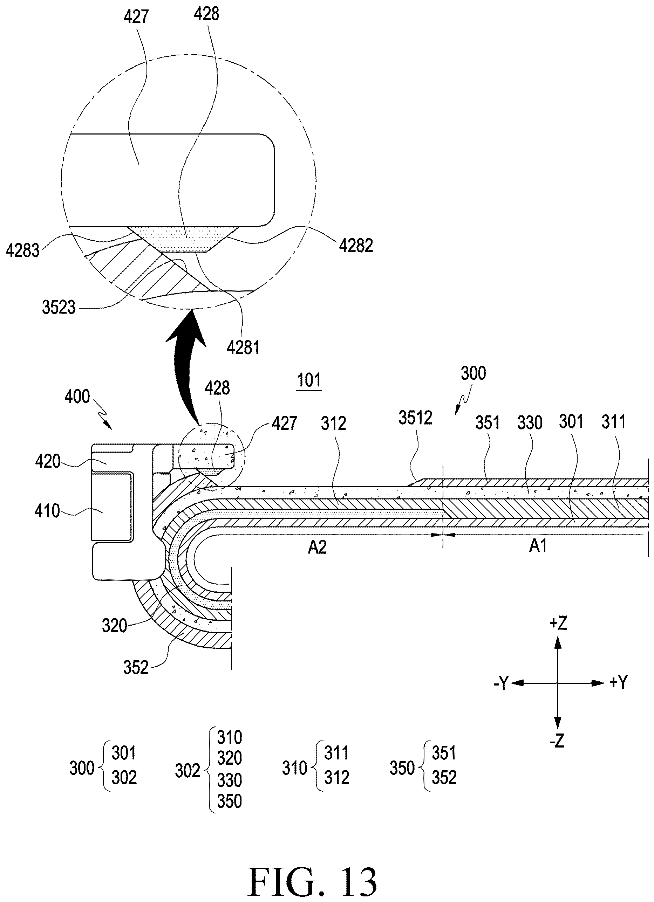

FIG. 12B is an enlarged view illustrating portion D of FIG. 12A according to an embodiment of the disclosure. FIG. 13 is a cross-sectional view illustrating a blocking structure and a display module in a slide-out state of an electronic device according to an embodiment of the disclosure.

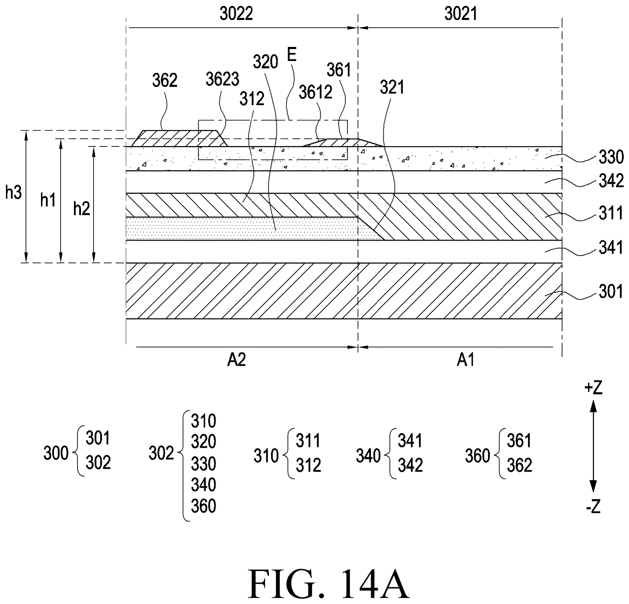

FIG. 14A is a cross-sectional view illustrating a display module including a display and a transparent window according to an embodiment of the disclosure.

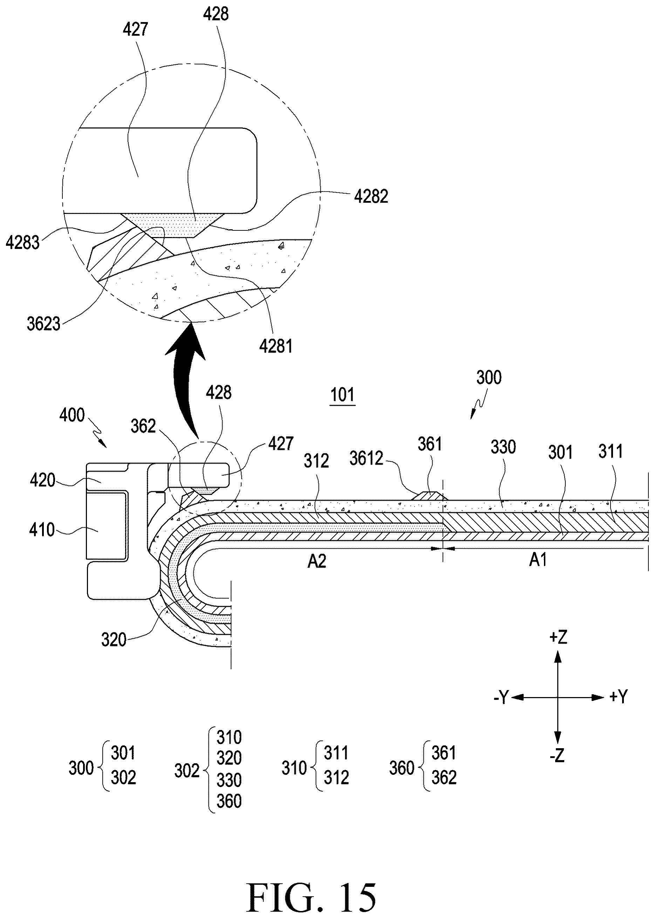

FIG. 15 is a cross-sectional view illustrating a blocking structure and a display module in a slide-out state of an electronic device according to an embodiment of the disclosure.

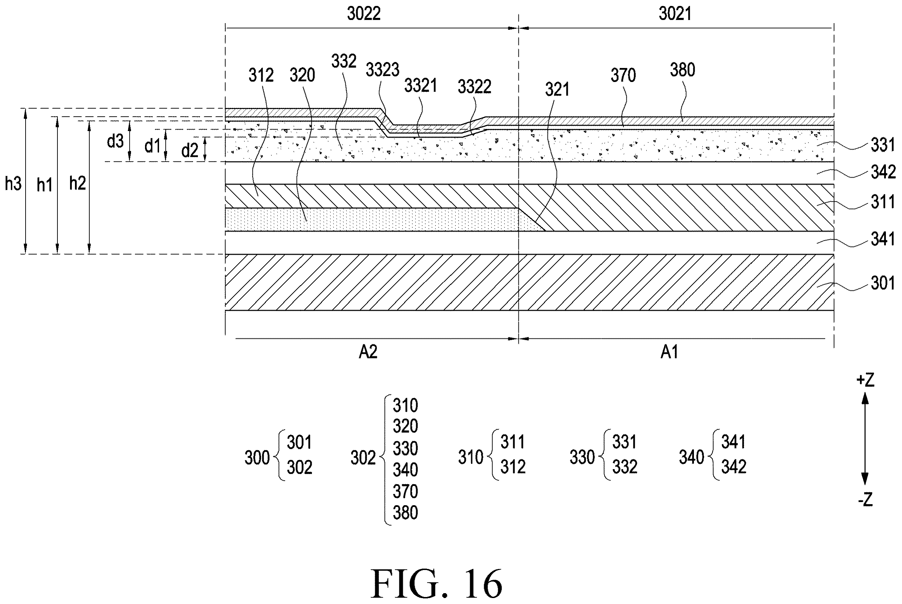

The embodiments of FIGS. 12A to 15 may be combined with the embodiments of FIGS. 1 to 11 or the embodiment of FIG. 16.

Referring to FIGS. 12A to 15, an electronic device 101 (e.g., the electronic device 101 of FIGS. 1 to 6) may include a display module 300 (e.g., the display module 300 of FIGS. 9A to 11) or a blocking structure 400 (e.g., the blocking structure 400 of FIGS. 9A to 11).

Referring to FIGS. 12A to 15, the display module 300 may include a display 301, a transparent window 302, a glass 310, a first glass 311, a second glass 312, a transparent resin layer 320, an inclined portion 321, a film layer 330, an adhesive layer 340, a first adhesive layer 341, a second adhesive layer 342, or a coating layer 350, 360.

The configuration of the display 301, the first display area A1, the second display area A2, the transparent window 302, the glass 310, the first glass 311, the second glass 312, the transparent resin layer 320, the inclined portion 321, the film layer 330, the adhesive layer 340, the first adhesive layer 341, or the second adhesive layer 342 of FIGS. 12A to 15 may be identical in whole or part to the configuration of the display 301, the first display area A1, the second display area A2, the transparent window 302, the glass 310, the first glass 311, the second glass 312, the transparent resin layer 320, the inclined portion 321, the film layer 330, the adhesive layer 340, the first adhesive layer 341, or the second adhesive layer 342 of FIGS. 9A to 11.

The blocking structure 400 of FIG. 13 or FIG. 15 may include a base member 410, a blocking member 420, a second blocking member 427, a sealing member 428, a second flat surface 4281, a third inclined surface 4282, or a fourth inclined surface 4283.

The configuration of the blocking structure 400, the base member 410, the blocking member 420, the second blocking member 427, the sealing member 428, the second flat surface 4281, the third inclined surface 4282, or the fourth inclined surface 4283 of FIG. 13 or FIG. 15 may be identical in whole or part to the configuration of the blocking structure 400, the base member 410, the blocking member 420, the second blocking member 427, the sealing member 428, the second flat surface 4281, the third inclined surface 4282, or the fourth inclined surface 4283 of FIGS. 11 to 12A.

According to an embodiment, a portion of the flexible display 301 (e.g., a portion of the second display area A2) may be configured to move from a front side of a housing (e.g., the housing 210 of FIGS. 2 to 3) to an interior thereof with the transparent window 302 as a second housing part (e.g., the second housing part 202 of FIGS. 2 to 5B) moves from an extended position (e.g., FIG. 3 or FIG. 5B) to a retracted position (e.g., FIG. 2 or FIG. 5A).

According to an embodiment, a thickness of the transparent window 302 (e.g., a thickness in a Z-axis direction of FIG. 12A or a thickness in a Z-axis direction of FIG. 14A) may vary. For example, the transparent window 302 may include a first portion having a thinner thickness (e.g., a thickness h2 of FIG. 12A or a thickness h2 of FIG. 14A) or a second portion having a thicker thickness (e.g., thicknesses h1, h3 of FIG. 12A or thicknesses h1, h3 of FIG. 14A) greater than the thickness of the first portion. For example, the first portion of the transparent window 302 having the thinner thickness h2 may correspond to a portion of the flexible display 301 configured to move from a front side of a housing (e.g., the housing 210 of FIGS. 2 to 3) to an interior thereof. For example, the second portion of the transparent window 302 may be a portion other than the first portion of the transparent window 302.

According to an embodiment, the transparent window 302 may include a film layer 330. According to an embodiment, the film layer 330 may be stacked on an outer surface of the glass 310. For example, the film layer 330 may include a polyester (PET) film, a protective layer (PL) film, a polyimide (PI) film, a high hardness protective film, or a flexible thin glass (FTG).

According to an embodiment, the film layer 330 may cover an outer surface of the glass 310. The film layer 330 may prevent the glass 310 from being damaged by external impact. Further, when the glass 310 is damaged, the film layer 330 may limit or reduce scattering of pieces of the glass 310. Accordingly, when the glass 310 is damaged, a user may be limited or prevented from being injured.

According to an embodiment, the film layer 330 may be stacked on an upper surface of the first glass 311 and an upper surface of the second glass 312.

Referring to FIGS. 12A to 13, the transparent window 302 may include a coating layer 350.

According to an embodiment, the coating layer 350 may form at least a portion of an outer surface of the transparent window 302 (e.g., a surface facing the +Z direction of FIGS. 12A to 13). The coating layer 350 may be stacked on an outer surface of the film layer 330.

According to an embodiment, the coating layer 350 may include a first coating layer 351 disposed on the first cover area 3021 or a second coating layer 352 disposed on the second cover area 3022. For example, the first coating layer 351 may be located on the first display area A1. For example, the second coating layer 352 may be located on the second display area A2.

According to an embodiment, the coating layer 350 may be formed by curing a composite polymer composition including an oligomer polymer. The coating layer 350 may be formed on the outer surface of the film layer 330 through a printing method.

According to an embodiment, a thickness of the first coating layer 351 (e.g., a thickness in a Z-axis direction of FIG. 12A) may be different from a thickness of the second coating layer 352 (e.g., a thickness in the Z-axis direction of FIG. 12A). For example, the thickness of the first coating layer 351 (e.g., a thickness in the Z-axis direction of FIG. 12A) may be smaller than the thickness of the second coating layer 352 (e.g., a thickness in the Z-axis direction of FIG. 12A).

According to an embodiment, the first coating layer 351 may be stacked on an outer surface of the film layer 330 located on the first cover area 3021 among the film layer 330. The first coating layer 351 may extend along the first display area A1 from a boundary between the first display area A1 and the second display area A2 or a boundary between the first cover area 3021 and the second cover area 3022.

According to an embodiment, the second coating layer 352 may be stacked on an outer surface of the film layer 330 located on the second cover area 3022 among the film layer 330. The second coating layer 352 may extend along the second display area A2.

According to an embodiment, the first coating layer 351 may be spaced apart from the second coating layer 352. The first coating layer 351 may include a first inclined surface 3512 formed to be inclined at an end facing the second coating layer 352. The first inclined surface 3512 may be configured to contact the third inclined surface 4282 of the sealing member 428.

According to an embodiment, the second coating layer 352 may include a second inclined surface 3523 formed to be inclined at an end facing the first coating layer 351. The second inclined surface 3523 may be configured to contact the fourth inclined surface 4283 of the sealing member 428.

According to an embodiment, the first inclined surface 3512 may be defined as forming a first area of the first coating layer 351 where thickness changes (e.g., a thickness in a Z-axis direction of FIG. 12A). The second inclined surface 3523 may be defined as forming a second area of the second coating layer 352 where thickness changes (e.g., a thickness in the Z-axis direction of FIG. 12A).

According to an embodiment, a first height p1 of the first inclined surface 3512 (e.g., a height in a Z-axis direction of FIG. 12B) may be defined as a height from a surface of the film layer 330 (e.g., a surface 330a of FIG. 12B) to a surface of the first coating layer 351 (e.g., a surface 3512a of FIG. 12B) connected to an upper end of the first inclined surface 3512 (e.g., an end facing the +Z direction of FIG. 12B). The first height p1 may be about 45 µm to about 550 µm (micrometer). For example, the first height p1 may be about 50 µm to about 500 µm (micrometer). The first height p1 may also be defined as a depth of the film layer 330 with respect to the first coating layer 351.

According to an embodiment, a second height p2 of the second inclined surface 3523 (e.g., a height in a Z-axis direction of FIG. 12B) may be defined as a height from the surface of the film layer 330 (e.g., the surface 330a of FIG. 12B) to a surface of the second coating layer 352 (e.g., a surface 3523a of FIG. 12B) connected to an upper end of the second inclined surface 3523 (e.g., an end facing the +Z direction of FIG. 12B). The second height p2 may be greater than the first height p1. The second height p2 may also be defined as a depth of the film layer 330 with respect to the second coating layer 352.

According to an embodiment, a width w of the surface 330a of the film layer 330 exposed between the first coating layer 351 and the second coating layer 352 may be defined as a distance between a lower end of the first inclined surface 3512 (e.g., an end facing the -Z-axis direction of FIG. 12B) and a lower end of the second inclined surface 3523 (e.g., an end facing the -Z-axis direction of FIG. 12B). The width w may be about 9 mm (millimeter) or more. For example, the width w may be about 10 mm (millimeter) or more. For example, the width w may be about 10 mm (millimeter) or more. For example, a portion of the transparent window 302 having the thinner thickness h2 corresponding to the illustrated width w may be defined as a first portion of the transparent window 302, and a portion of the transparent window 302 having the thick thickness (h1, h3) corresponding to portions other than the first portion may be defined as a second portion of the transparent window 302.

According to an embodiment, the first inclined surface 3512 and the surface 330a of the film layer 330 may substantially form an obtuse angle (e.g., a first obtuse angle s1 of FIG. 12B). The second inclined surface 3523 and the surface 330a of the film layer 330 may substantially form an obtuse angle (e.g., a second obtuse angle s2 of FIG. 12B). An obtuse angle formed between the first inclined surface 3512 and the surface 330a of the film layer 330 may be greater than an obtuse angle formed between the second inclined surface 3523 and the surface 330a of the film layer 330. Since a first obtuse angle s1 formed between the first inclined surface 3512 and the surface 330a of the film layer 330 is provided relatively larger than a second obtuse angle s2 formed between the second inclined surface 3523 and the surface 330a of the film layer 330, a sense of heterogeneity felt when touching the first inclined surface 3512 may be decreased or alleviated. Since the first obtuse angle s1 formed between the first inclined surface 3512 and the surface 330a of the film layer 330 is provided relatively larger than the second obtuse angle s2 formed between the second inclined surface 3523 and the surface 330a of the film layer 330, an impact occurring when the first inclined surface 3512 and the sealing member 428 contact may be decreased or alleviated.

According to an embodiment, due to a thickness difference between the first coating layer 351 and the second coating layer 352, a thickness h1 of at least a portion of the first cover area 3021 may be different from a thickness (h2, h3) of at least a portion of the second cover area 3022.

According to an embodiment, a thickness h1 of the first cover area 3021 including the first coating layer 351 may be greater than a thickness h2 of a portion of the second cover area 3022 where the second coating layer 352 is not stacked.

According to an embodiment, a thickness h3 of the second cover area 3022 including the second coating layer 352 may be greater than the thickness h1 of the first cover area 3021.

According to an embodiment, the sealing member 428 may be configured to seal a gap formed between a front surface of a first cover member (e.g., the front surface 211d of the first cover member 211 of FIG. 6) and the display module 300 by contacting at least a portion of the transparent window 302.

Referring to FIG. 13, a slide-out state of the electronic device 101 (e.g., FIG. 3 or FIG. 11) is illustrated. In the slide-out state of the electronic device 101, the fourth inclined surface 4283 of the sealing member 428 may contact at least a portion of the second coating layer 352 (e.g., the second inclined surface 3523). In the slide-out state of the electronic device 101 (e.g., FIG. 3), as the sealing member 428 contacts at least a portion of the second coating layer 352, an inflow of foreign objects from outside may be blocked through a gap formed between the front surface of the first cover member and the transparent window 302.

According to an embodiment, in a slide-in state of the electronic device 101 (e.g., FIG. 2, FIG. 10A, or FIG. 10B), the second flat surface 4281 and/or the third inclined surface 4282 of the sealing member 428 may contact at least a portion of the first coating layer 351 (e.g., the first inclined surface 3512). In the slide-in state of the electronic device 101 (e.g., FIG. 2), as the sealing member 428 contacts at least a portion of the first coating layer 351, an inflow of foreign objects from outside may be blocked through a gap formed between the front surface of the first cover member and the transparent window 302.

According to an embodiment, when the electronic device 101 changes (e.g., changes from a slide-in state to a slide-out state or changes from a slide-out state to a slide-in state), the second flat surface 4281 of the sealing member 428 may be spaced apart from an outer surface of the film layer 330 positioned between the first coating layer 351 and the second coating layer 352. Accordingly, when a second housing part (e.g., the second housing part 202 of FIGS. 2 to 5B) slides relative to a first housing part (e.g., the first housing part 201 of FIGS. 2 to 6), the sealing member 428 and the transparent window 302 are spaced apart, so that occurrence of scratches on the film layer 330 of the transparent window 302 may be decreased or limited. For example, at least a portion of the sealing member 428 (e.g., the second flat surface 4281) may be spaced apart from the outer surface of the film layer 330 when a state of a second housing part (e.g., the second housing part 202 of FIGS. 2 to 5B) changes from a retracted position (e.g., FIG. 2, FIG. 5A, FIG. 10A, or FIG. 10B) to an extended position (e.g., FIG. 3, FIG. 5B, FIG. 11, FIG. 13, or FIG. 15), or when the state of the second housing part changes from an extended position (e.g., FIG. 3, FIG. 5B, FIG. 11, FIG. 13, or FIG. 15) to a retracted position (e.g., FIG. 2, FIG. 5A, FIG. 10A, or FIG. 10B).

According to an embodiment, the sealing member 428 of a blocking structure (e.g., the blocking structure 400 of FIGS. 6 to 8) may be configured to contact the first inclined surface 3512 while a second housing part (e.g., the second housing part 202 of FIGS. 2 to 5B) is in a retracted position (e.g., FIG. 2, FIG. 5A, FIG. 10A, or FIG. 10B). According to an embodiment, the sealing member 428 of a blocking structure (e.g., the blocking structure 400 of FIGS. 6 to 8) may be configured to contact the second inclined surface 3523 while a second housing part (e.g., the second housing part 202 of FIGS. 2 to 5B) is in an extended position (e.g., FIG. 3, FIG. 5B, FIG. 11, or FIG. 13).

Referring to FIGS. 14A to 15, the transparent window 302 may include a coating layer 360.

According to an embodiment, the coating layer 360 may form at least a portion of an outer surface of the transparent window 302 (e.g., a surface facing the +Z direction of FIGS. 14A to 15). The coating layer 360 may be stacked on an outer surface of the film layer 330.

According to an embodiment, the coating layer 360 may include a first coating layer 361 disposed on a boundary between the first cover area 3021 and the second cover area 3022 or a second coating layer 362 disposed on the second cover area 3022.

According to an embodiment, the coating layer 360 may be formed by curing a composite polymer composition including an oligomer polymer. The coating layer 360 may be formed on the outer surface of the film layer 330 through a printing method.

According to an embodiment, a thickness of the first coating layer 361 (e.g., a thickness in a Z-axis direction of FIG. 14A) may be different from a thickness of the second coating layer 362 (e.g., a thickness in the Z-axis direction of FIG. 14A). For example, the thickness of the first coating layer 361 (e.g., a thickness in the Z-axis direction of FIG. 14A) may be smaller than the thickness of the second coating layer 362 (e.g., a thickness in the Z-axis direction of FIG. 14A).

According to an embodiment, the first coating layer 361 may be stacked on an outer surface of the film layer 330 located on the boundary between the first cover area 3021 and the second cover area 3022 among the film layer 330. The first coating layer 361 may be disposed at a boundary between the first display area A1 and the second display area A2 or a boundary between the first cover area 3021 and the second cover area 3022. The first coating layer 361 may form a dome structure or an island surface structure on at least a portion of the outer surface of the film layer 330.

According to an embodiment, the second coating layer 352 may be stacked on an outer surface of the film layer 330 located on the second portion 3022 among the film layer 330. The second coating layer 352 may form a dome structure or an island surface structure on at least a portion of the outer surface of the film layer 330.

According to an embodiment, the first coating layer 361 may be spaced apart from the second coating layer 362. The first coating layer 361 may include a first inclined surface 3612 formed to be inclined at an end facing the second coating layer 362. The first inclined surface 3612 may be configured to contact the third inclined surface 4282 of the sealing member 428.

According to an embodiment, the second coating layer 362 may include a second inclined surface 3623 formed to be inclined at an end facing the first coating layer 361. The second inclined surface 3623 may be configured to contact the fourth inclined surface 4283 of the sealing member 428.

According to an embodiment, the first inclined surface 3612 may be defined as forming a first area of the first coating layer 361 where thickness changes (e.g., a thickness in a Z-axis direction of FIG. 14A). The second inclined surface 3623 may be defined as forming a second area of the second coating layer 362 where thickness changes (e.g., a thickness in the Z-axis direction of FIG. 14A).

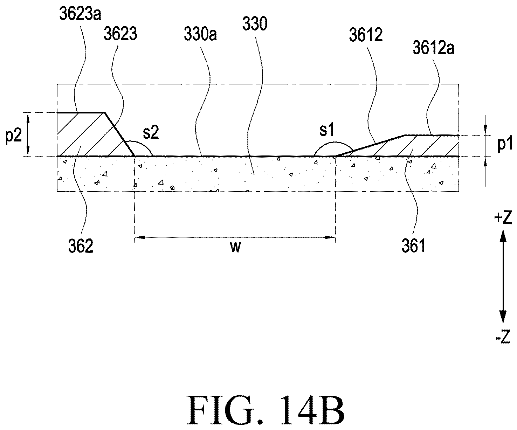

According to an embodiment, a first height p1 of the first inclined surface 3612 (e.g., a height in a Z-axis direction of FIG. 14B) may be defined as a height from a surface of the film layer 330 (e.g., a surface 330a of FIG. 14B) to a surface of the first coating layer 361 (e.g., a surface 3612a of FIG. 14B) connected to an upper end of the first inclined surface 3612 (e.g., an end facing the +Z direction of FIG. 14B). The first height p1 may be about 45 µm to about 550 µm (micrometer). For example, the first height p1 may be about 50 µm to about 500 µm (micrometer). The first height p1 may also be defined as a depth of the film layer 330 with respect to the first coating layer 361.

According to an embodiment, a second height p2 of the second inclined surface 3623 (e.g., a height in a Z-axis direction of FIG. 14B) may be defined as a height from the surface of the film layer 330 (e.g., the surface 330a of FIG. 14B) to a surface of the second coating layer 362 (e.g., a surface 3623a of FIG. 14B) connected to an upper end of the second inclined surface 3623 (e.g., an end facing the +Z direction of FIG. 14B). The second height p2 may be greater than the first height p1. The second height p2 may also be defined as a depth of the film layer 330 with respect to the second coating layer 362.

According to an embodiment, a width w of the surface 330a of the film layer 330 exposed between the first coating layer 361 and the second coating layer 362 may be defined as a distance between a lower end of the first inclined surface 3612 (e.g., an end facing the -Z-axis direction of FIG. 14B) and a lower end of the second inclined surface 3623 (e.g., an end facing the -Z-axis direction of FIG. 14B). The width w may be about 9 mm (millimeter) or more. For example, the width w may be about 10 mm (millimeter) or more. For example, the width w may be about 10 mm (millimeter) or more. For example, a portion of the transparent window 302 having the thinner thickness h2 corresponding to the illustrated width w may be defined as a first portion of the transparent window 302, and a portion of the transparent window 302 having the thick thickness (h1, h3) corresponding to portions other than the first portion may be defined as a second portion of the transparent window 302.

According to an embodiment, the first inclined surface 3612 and the surface 330a of the film layer 330 may substantially form an obtuse angle (e.g., a first obtuse angle s1 of FIG. 14B). The second inclined surface 3623 and the surface 330a of the film layer 330 may substantially form an obtuse angle (e.g., a second obtuse angle s2 of FIG. 14B). An obtuse angle formed between the first inclined surface 3612 and the surface 330a of the film layer 330 may be greater than an obtuse angle formed between the second inclined surface 3623 and the surface 330a of the film layer 330. Since a first obtuse angle s1 formed between the first inclined surface 3612 and the surface 330a of the film layer 330 is provided relatively larger than a second obtuse angle s2 formed between the second inclined surface 3623 and the surface 330a of the film layer 330, a sense of heterogeneity felt when touching the first inclined surface 3612 may be decreased or alleviated. Since the first obtuse angle s1 formed between the first inclined surface 3612 and the surface 330a of the film layer 330 is provided relatively larger than the second obtuse angle s2 formed between the second inclined surface 3623 and the surface 330a of the film layer 330, an impact occurring when the first inclined surface 3612 and the sealing member 428 contact may be decreased or alleviated.

According to an embodiment, due to a thickness difference between the first coating layer 361 and the second coating layer 362, a thickness h1 of at least a portion of the first cover area 3021 may be different from a thickness (h2, h3) of at least a portion of the second cover area 3022.

According to an embodiment, a thickness h2 of the first cover area 3021 where the first coating layer 361 is not stacked may be smaller than a thickness h1 of the first cover area 3021 including the first coating layer 361.

According to an embodiment, a thickness h1 of the first cover area 3021 including the first coating layer 361 may be greater than a thickness h2 of a portion of the second cover area 3022 where the second coating layer 362 is not stacked.

According to an embodiment, a thickness h3 of the second cover area 3022 including the second coating layer 362 may be greater than the thickness h1 of the first cover area 3021.

According to an embodiment, the sealing member 428 may be configured to seal a gap formed between a front surface of a first cover member (e.g., the front surface 211d of the first cover member 211 of FIG. 6) and the display module 300 by contacting at least a portion of the transparent window 302.

Referring to FIG. 15, a slide-out state of the electronic device 101 (e.g., FIG. 3 or FIG. 11) is illustrated. In the slide-out state of the electronic device 101, the fourth inclined surface 4283 of the sealing member 428 may contact at least a portion of the second coating layer 362 (e.g., the second inclined surface 3623). In the slide-out state of the electronic device 101 (e.g., FIG. 3), as the sealing member 428 contacts at least a portion of the second coating layer 362, an inflow of foreign objects from outside may be blocked through a gap formed between the front surface of the first cover member and the transparent window 302.

According to an embodiment, in a slide-in state of the electronic device 101 (e.g., FIG. 2, FIG. 10A, or FIG. 10B), the second flat surface 4281 and/or the third inclined surface 4282 of the sealing member 428 may contact at least a portion of the first coating layer 361 (e.g., the first inclined surface 3612). In the slide-in state of the electronic device 101 (e.g., FIG. 2), as the sealing member 428 contacts at least a portion of the first coating layer 361, an inflow of foreign objects from outside may be blocked through a gap formed between the front surface of the first cover member and the transparent window 302.

According to an embodiment, when the electronic device 101 changes (e.g., changes from a slide-in state to a slide-out state or changes from a slide-out state to a slide-in state), the second flat surface 4281 of the sealing member 428 may be spaced apart from an outer surface of the film layer 330 positioned between the first coating layer 361 and the second coating layer 362. Accordingly, when a second housing part (e.g., the second housing part 202 of FIGS. 2 to 5B) slides relative to a first housing part (e.g., the first housing part 201 of FIGS. 2 to 6), the sealing member 428 and the transparent window 302 are spaced apart, so that occurrence of scratches on the film layer 330 of the transparent window 302 may be decreased or limited. For example, at least a portion of the sealing member 428 (e.g., the second flat surface 4281) may be spaced apart from the outer surface of the film layer 330 when a state of a second housing part (e.g., the second housing part 202 of FIGS. 2 to 5B) changes from a retracted position (e.g., FIG. 2, FIG. 5A, FIG. 10A, or FIG. 10B) to an extended position (e.g., FIG. 3, FIG. 5B, FIG. 11, FIG. 13, or FIG. 15), or when the state of the second housing part changes from an extended position (e.g., FIG. 3, FIG. 5B, FIG. 11, FIG. 13, or FIG. 15) to a retracted position (e.g., FIG. 2, FIG. 5A, FIG. 10A, or FIG. 10B).

According to an embodiment, the sealing member 428 of a blocking structure (e.g., the blocking structure 400 of FIGS. 6 to 8) may be configured to contact the first inclined surface 3612 while a second housing part (e.g., the second housing part 202 of FIGS. 2 to 5B) is in a retracted position (e.g., FIG. 2, FIG. 5A, FIG. 10A, or FIG. 10B). According to an embodiment, the sealing member 428 of a blocking structure (e.g., the blocking structure 400 of FIGS. 6 to 8) may be configured to contact the second inclined surface 3623 while a second housing part (e.g., the second housing part 202 of FIGS. 2 to 5B) is in an extended position (e.g., FIG. 3, FIG. 5B, or FIG. 15).

FIG. 16 is a cross-sectional view illustrating a display module including a display and a transparent window according to an embodiment of the disclosure.

The embodiments of FIG. 16 may be combined with the embodiments of FIGS. 1 to 15.

Referring to FIG. 16, an electronic device (e.g., the electronic device 101 of FIGS. 1 to 6) may include a display module 300 (e.g., the display module 300 of FIGS. 9A to 11).

Referring to FIG. 16, the display module 300 may include a display 301, a transparent window 302, a glass 310, a first glass 311, a second glass 312, a transparent resin layer 320, an inclined portion 321, a film layer 330, a first film area 331, a second film area 332, a recess 3321, 3322, 3323, a first flat surface 3321, a first inclined surface 3322, a second inclined surface 3323, an adhesive layer 340, a first adhesive layer 341, or a second adhesive layer 342.

The configuration of the display 301, the transparent window 302, the glass 310, the first glass 311, the second glass 312, the transparent resin layer 320, the inclined portion 321, the film layer 330, the first film area 331, the second film area 332, the recess 3321, 3322, 3323, the first flat surface 3321, the first inclined surface 3322, the second inclined surface 3323, the adhesive layer 340, the first adhesive layer 341, or the second adhesive layer 342 of FIG. 16 may be identical in whole or part to the configuration of the display 301, the transparent window 302, the glass 310, the first glass 311, the second glass 312, the transparent resin layer 320, the inclined portion 321, the film layer 330, the first film area 331, the second film area 332, the recess 3321, 3322, 3323, the first flat surface 3321, the first inclined surface 3322, the second inclined surface 3323, the adhesive layer 340, the first adhesive layer 341, or the second adhesive layer 342 of FIGS. 9A to 11.

According to an embodiment, the transparent window 302 may include a reinforcing coating layer 370 or a reinforcing film layer 380.

According to an embodiment, the reinforcing coating layer 370 may be stacked on an outer surface of the film layer 330. The reinforcing coating layer 370 may be attached to the outer surface of the film layer 330 to enhance hardness of the transparent window 302 or the display module 300.

According to an embodiment, the reinforcing coating layer 370 may be formed by curing a composite polymer composition including an oligomer polymer. The reinforcing coating layer 370 may be formed on the outer surface of the film layer 330 through a printing method.

According to an embodiment, a thickness of the reinforcing coating layer 370 (e.g., a thickness in a Z-axis direction of FIG. 16) may be about 2.7 µm to about 3.3 µm (micrometer). For example, the thickness of the reinforcing coating layer 370 may be about 3.0 µm (micrometer). According to an embodiment, hardness of the reinforcing coating layer 370 may be provided as a pencil hardness of 6H or higher.

According to an embodiment, the reinforcing coating layer 370 may be stacked along the first film area 331 and the second film area 332. At least a portion of an outer surface of the reinforcing coating layer 370 may be formed in a stepped manner to correspond to the recess 3321, 3322, 3323 of the film layer 330.

According to an embodiment, the reinforcing film layer 380 may be stacked on an outer surface of the reinforcing coating layer 370. The reinforcing film layer 380 may be attached to the outer surface of the film layer 330 to limit damage to the transparent window 302 or the display module 300.

According to an embodiment, the reinforcing film layer 380 may include a polyester (PET) film, a thermoplastic polyurethane (TPU) film, or a polyimide (PI) film.

According to an embodiment, the reinforcing film layer 380 may form an outer surface of the transparent window 302. The reinforcing film layer 380 may be configured to be replaceable. For example, when an outer surface of the reinforcing film layer 380 is damaged by a scratch or the like, the damaged reinforcing film layer 380 may be removed from the reinforcing coating layer 370, and a new reinforcing film layer 380 may be stacked on the reinforcing coating layer 370.

An electronic device (e.g., a portable terminal) may include a display with a flat surface or both a flat and curved surface. An electronic device including a display may have a limitation in realizing a screen larger than the size of the electronic device due to the fixed display structure. Accordingly, research has been conducted on electronic devices including a rollable display.

An electronic device with a rollable display may have its partial area extended or shrunken when slid.

In an electronic device including a rollable display, an external foreign object may be introduced into the inside of the electronic device through a portion where the rollable display and the housing surrounding the rollable display face each other or through a gap formed between the portions facing each other.

According to an embodiment of the disclosure, an electronic device including a blocking structure that blocks an inflow of foreign objects from outside through a gap formed between a housing and a display may be provided.

According to an embodiment of the disclosure, an electronic device including a transparent window that limits or prevents formation of scratches on a display when the display moves based on sliding movement of a housing may be provided.

However, problems to be solved by the disclosure are not limited to the above-mentioned problems, and may be variously determined within a scope without departing from a spirit and scope of the disclosure.

According to an embodiment of the disclosure, an electronic device capable of blocking an inflow of foreign objects from outside into an interior of the electronic device and limiting or reducing damage to a display may be provided.

The effects obtainable from the disclosure are not limited to the effects mentioned above, and other effects not mentioned is clearly understood by those skilled in the art to which the disclosure pertains from the following description.

According to an embodiment of the disclosure, the electronic device 101 may include a housing 210, a flexible display 203, 231, 301, a transparent window 302, or a blocking structure 400. The housing may include a first housing part 201 or a second housing part 202. The second housing part may be configured to move with respect to the first housing part between a retracted position and an extended position. The flexible display may be supported by the first housing part and the second housing part. The transparent window may be disposed on an outer surface of the flexible display. The blocking structure may be disposed between the housing and the flexible display. The blocking structure may be configured to limit an inflow of foreign objects from outside. A portion of the flexible display may be configured to move from a front side of the housing to an interior thereof with the transparent window as the second housing part moves from the extended position to the retracted position. A thickness h2 of a first portion 3021 of the transparent window may be thinner than a thickness (h1, h3) of a second portion 3022 of the transparent window.

According to an embodiment of the disclosure, the electronic device 101 may include a housing 210, a flexible display 203, 231, 301, a blocking structure 400, or a transparent window 302. The housing may include a first housing part 201 or a second housing part 202. The second housing part may be configured to slide with respect to the first housing part. The flexible display may include a first display area A1 or a second display area A2. The first display area may be disposed on the second housing part. The second display area may extend from the first display area. At least a portion of the second display area may be configured to move based on a slide movement of the second housing part. The blocking structure may be disposed between the housing and the flexible display. The blocking structure may be configured to limit an inflow of foreign objects from outside. The transparent window may cover an outer surface of the flexible display. The transparent window may include a first cover area 3021 or a second cover area 3022. The first cover area may be disposed on the first display area. The second cover area may be disposed on the second display area. A thickness of at least a portion of the first cover area may be different from a thickness of at least a portion of the second cover area.

According to an embodiment, the first portion of the transparent window having the thin thickness may correspond to the portion of the flexible display configured to move from the front side of the housing to the interior thereof.

According to an embodiment, the thickness of the first cover area may be greater than a thickness of a portion of the second cover area. The thickness of the first cover area may be smaller than a thickness of another portion of the second cover area.

According to an embodiment, the transparent window may include a glass 310, a film layer 330, or a transparent resin layer 320. The glass may be disposed on the outer surface of the flexible display. The film layer may be disposed on an outer surface of the glass. The transparent resin layer may be disposed between the flexible display and at least a portion of the glass.

According to an embodiment, the flexible display may include a first display area A1 or a second display area A2. The first display area may be disposed on the second housing part. The second display area may extend from the first display area. At least a portion of the second display area may be configured to move based on a movement of the second housing part. The glass may include a first glass 311 or a second glass 312. The first glass may be disposed on the first display area. The second glass may be disposed on the second display area. A thickness t1 of the first glass may be greater than a thickness t2 of the second glass.

According to an embodiment, the second glass may extend from the first glass.

According to an embodiment, the transparent resin layer may be positioned on the second portion. A refractive index of the transparent resin layer may be substantially the same as a refractive index of the glass.

According to an embodiment, the film layer may include a recess 3321, 3322, 3323 recessed in at least a portion of the film layer.

According to an embodiment, the recess may include a first flat surface 3321, a first inclined surface 3322 in a first area where thickness changes, or a second inclined surface 3323 in a second area where thickness changes. The blocking structure may be configured to contact the first inclined surface while the second housing part is in the retracted position. The blocking structure may be configured to contact the second inclined surface while the second housing part is in the extended position.

According to an embodiment, the recess may include a first flat surface 3321, a first inclined surface 3322 disposed to be inclined from one end of the first flat surface, or a second inclined surface 3323 disposed to be inclined from the other end of the first flat surface.

According to an embodiment, the blocking structure may include a sealing member 428 configured to contact one of the first inclined surface or the second inclined surface.

According to an embodiment, the sealing member may include a third inclined surface 4282 or a fourth inclined surface 4283. The third inclined surface may be configured to contact the first inclined surface while the second housing part is in the retracted position. The fourth inclined surface may be configured to contact the second inclined surface while the second housing part is in the extended position.

According to an embodiment, the sealing member may be configured to contact the first inclined surface while the second housing part is in the retracted position. The sealing member may be configured to contact the second inclined surface while the second housing part is in the extended position.

According to an embodiment, when the electronic device is in a slide-in state, the sealing member may be configured to contact the first inclined surface. When the electronic device is in a slide-out state, the sealing member may be configured to contact the second inclined surface.

According to an embodiment, when a state of the second housing part changes from the retracted position to the extended position, or when the state of the second housing part changes from the extended position to the retracted position, the sealing member may be spaced apart from the first flat surface.

According to an embodiment, when the electronic device changes from a slide-in state to a slide-out state, or when the electronic device changes from a slide-out state to a slide-in state, the sealing member may be spaced apart from the first flat surface.

According to an embodiment, the transparent window may further include a coating layer 350, 360 disposed on an outer surface of the film layer.

According to an embodiment, the coating layer may include a first coating layer 351, 361 or a coating layer 352, 362. The first coating layer may be located on the first display area. The second coating layer may be located on the second display area. The second coating layer may be spaced apart from the first coating layer. A thickness of the first coating layer may be different from a thickness of the second coating layer.

According to an embodiment, the first coating layer may include a first inclined surface 3512, 3612 inclined at a portion of the first coating layer facing the second coating layer. The second coating layer may include a second inclined surface 3523, 3623 inclined at a portion of the second coating layer facing the first coating layer.

According to an embodiment, the transparent window may further include a reinforcing coating layer 370 or a reinforcing film layer 380. The reinforcing coating layer may be disposed on an outer surface of the film layer. The reinforcing film layer may be disposed on an outer surface of the reinforcing coating layer. The reinforcing film layer may be configured to be replaceable.

According to an embodiment of the disclosure, the electronic device 101 may include a housing 210, a flexible display 203, 231, 301, a blocking structure 400, or a transparent window 302. The housing may include a first housing part 201 or a second housing part 202. The second housing part may be configured to be movably connected to the first housing part between a retracted position and an extended position. The flexible display may be connected to the first housing part and the second housing part such that a size of a portion visible from a front side of the housing is changed as the second housing part moves between the retracted position and the extended position. The blocking structure may be disposed between the housing and the flexible display. The blocking structure may be configured to limit an inflow of foreign objects from outside. The transparent window may cover an outer surface of the flexible display. The transparent window may include a recess 3321, 3322, 3323 recessed in an outer surface of the transparent window.

According to an embodiment, the transparent window may include a first glass 311, a second glass 312, or a transparent resin layer 320. The second glass may extend from the first glass. The second glass may have a thickness smaller than a thickness of the first glass. The transparent resin layer may be disposed between the second glass and the flexible display. The transparent resin layer may be configured to compensate for a thickness difference between the first glass and the second glass.

According to an embodiment, the transparent window may further include a film layer 330. The film layer may be stacked on the first glass and the second glass. The film layer may include the recess.

According to an embodiment, the blocking structure may include a sealing member 428 configured to contact or be spaced apart from the recess of the transparent window.

According to an embodiment, the sealing member may include a rubber material or a silicone material.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device (101) comprising:
a housing (210) including a first housing part (201) and a second housing part (202) configured to move with respect to the first housing part between a retracted position and an extended position;
a flexible display (203, 231, 301) supported by the first housing part and the second housing part;
a transparent window (302) disposed on an outer surface of the flexible display; and
a blocking structure (400) disposed between the housing and the flexible display, and configured to limit an inflow of foreign substances from outside,
wherein a portion of the flexible display is configured to move from a front side of the housing to an interior thereof with the transparent window as the second housing part moves from the extended position to the retracted position,
wherein a thickness (h2) of a first portion of the transparent window is thinner than a thickness (h1, h3) of a second portion of the transparent window.

2. The electronic device of claim 1, wherein the first portion of the transparent window having the thinner thickness (h2) corresponds to the portion of the flexible display that is configured to move from the front side of the housing to the interior thereof.

3. The electronic device of claim 1 or 2, wherein the transparent window includes:
a glass (310) disposed on the outer surface of the flexible display;
a film layer (330) disposed on an outer surface of the glass; and
a transparent resin layer (320) disposed between the flexible display and at least a portion of the glass.

4. The electronic device of any one of claims 1 to 3, wherein the flexible display includes:
a first display area (A1) disposed in the second housing part; and
a second display area (A2) extended from the first display area, wherein at least a portion of the second display area is configured to move based on a movement of the second housing part, and
wherein the glass includes:
a first glass (311) disposed on the first display area; and
a second glass (312) disposed on the second display area,
wherein a thickness (t1) of the first glass is greater than a thickness (t2) of the second glass.

5. The electronic device of any one of claims 1 to 4, wherein the second glass is extended from the first glass.

6. The electronic device of any one of claims 1 to 5, wherein the transparent resin layer is disposed between the second glass and the second display area, and
wherein a refractive index of the transparent resin layer is substantially equal to a refractive index of the glass.

7. The electronic device of any one of claims 1 to 6, wherein the film layer includes a recess (3321, 3322, 3323) recessed in at least a portion of the film layer.

8. The electronic device of any one of claims 1 to 7, wherein the recess includes:
a first flat surface (3321);
a first inclined surface (3322) in a first area where thickness changes, wherein the blocking structure is configured to contact the first inclined surface while the second housing part is in the retracted position; and
a second inclined surface (3323) in a second area where thickness changes, wherein the blocking structure is configured to contact the second inclined surface while the second housing part is in the extended position.

9. The electronic device of any one of claims 1 to 8, wherein the blocking structure includes a sealing member (428) configured to contact one of the first inclined surface or the second inclined surface.

10. The electronic device of any one of claims 1 to 9, wherein the sealing member includes:
a third inclined surface (4282) configured to contact the first inclined surface while the second housing part is in the retracted position; and
a fourth inclined surface (4283) configured to contact the second inclined surface while the second housing part is in the extended position.

11. The electronic device of any one of claims 1 to 10, wherein when a state of the second housing part is changed from the retracted position to the extended position or when the state of the second housing part is changed from the extended position to the retracted position, the sealing member is spaced apart from the first flat surface.

12. The electronic device of any one of claims 1 to 12, wherein the transparent window further includes a coating layer (350, 360) disposed on an outer surface of the film layer.

13. The electronic device of any one of claims 1 to 12, wherein the coating layer includes:
a first coating layer (351, 361) located on the first display area; and
a second coating layer (352, 362) located on the second display area and spaced apart from the first coating layer, and
wherein a thickness of the first coating layer is different from a thickness of the second coating layer.

14. The electronic device of any one of claims 1 to 13, wherein the first coating layer includes a first inclined surface (3512, 3612) inclined at a portion, facing the second coating layer, of the first coating layer, and
wherein the second coating layer includes a second inclined surface (3523, 3623) inclined at a portion, facing the first coating layer, of the second coating layer.

15. The electronic device of any one of claims 1 to 14, wherein the transparent window further includes:
a reinforcing coating layer (370) disposed on an outer surface of the film layer; and
a reinforcing film layer (380) disposed on an outer surface of the reinforcing coating layer and configured to be replaceable.
